# EUROPEAN PATENT SPECIFICATION

(11) **EP 4 438 676 B1**
(45) Date of publication and mention of the grant of the patent: **28.10.2026**
(21) Application number: 23165029.2
(22) Date of filing: 29.03.2023
(51) Int. Cl.: C08L 21/00, B60C 1/00, C08K 3/013, C08K 9/04, C08L 97/00

(54) **RUBBER COMPOSITION CONTAINING ORGANIC FILLERS AND BEING CROSS-LINKABLE BY MEANS OF SULFUR**
KAUTSCHUKZUSAMMENSETZUNG MIT ORGANISCHEN FÜLLSTOFFEN, DIE MIT SCHWEFEL VERNETZBAR IST
COMPOSITION DE CAOUTCHOUC CONTENANT DES CHARGES ORGANIQUES ET POUVANT ÊTRE RÉTICULÉE AU MOYEN DE SOUFRE

(43) Date of publication of application: 02.10.2024
(73) Proprietor: SunCoal Industries GmbH, 14974 Ludwigsfelde (DE)
(72) Inventor: SCHMAUCKS, Gerd, 14974 Ludwigsfelde (DE); SCHWAIGER, Bernhard, 50374 Erftstadt (DE); STÜCKER, Alexander, 14974 Ludwigsfelde (DE); WITTMANN, Tobias, 14974 Ludwigsfelde (DE)
(74) Representative: Steffan & Kiehne Patentanwälte PartG mbB

(56) References cited:
- EP-A1- 3 192 825
- WO-A1-2020/140155
- WO-A1-2022/008008
- WO-A1-2022/243486

## Description

The present invention relates to a vulcanizable rubber composition, comprising a vulcanization system VS that comprises at least sulfur and/or at least one sulfur donor that releases sulfur under vulcanization conditions, at least one rubber cross-linkable by means of sulfur and/or sulfur donor, and at least one organic filler, to a kit of parts comprising as part A) a rubber composition containing the above-mentioned rubber and filler, and as part B) the vulcanization system VS comprising at least sulfur and/or at least one sulfur donor, to vulcanized rubber compositions respectively obtainable therefrom, to a use of the above-mentioned products for employment in the fabrication of tires, tire components and rubber articles, and to corresponding tires, tire components and rubber articles as such.

### State of the art / Background of the invention

The employment of reinforcing fillers in rubber compositions is known in the prior art. By employing reinforcing fillers, the service characteristics of vulcanized rubber articles produced therefrom are guaranteed. For example, the employment of reinforcing fillers increases the viscosity of the rubbers and improves the fracture behavior of the vulcanizates. Here, industrial carbon blacks represent the largest part of reinforcing fillers. Industrial carbon blacks are produced by incomplete combustion of organic compounds or by thermal decomposition of hydrocarbons. Most of the industrial carbon blacks are produced by the furnace process. Because of the high amount of CO₂ during the production process, it is desirable to avoid, or to reduce to a minimum, the use of fossil energy sources for the production of fillers. In addition, industrial carbon blacks may often not be usable for certain applications for color reasons. A known alternative for the employment of industrial carbon blacks as reinforcing fillers is precipitated silica together with bifunctional silanes.

For the fabrication of treads for car tires, the employment of silica with BET surfaces of 120-200 m²/g together with bifunctional coupling agents, such as sulfur-functional silanes, has been known, since it was possible to extend with them, as compared to the employment of industrial carbon black, the "magic triangle" of tire performance, which consists of abrasion, rolling resistance and wet traction.

In contrast to treads, for dynamic structural parts (carcass, belt, layers, bands/strips) the wear by abrasion or the wet or dry traction do not play as important a role than in the case of tire treads. The primary goal with dynamic structural parts is to reduce the conversion of mechanical energy into heat. Heat formation is described by the loss factor tan delta (tan δ). The loss factor tan delta characterizes the viscoelastic behavior and results from the ratio of the viscous and the elastic component (loss modulus and storage modulus). The storage modulus represents the part of the mechanical energy that is stored by the system, while the loss modulus represents the mechanical energy converted into thermal energy. A low loss factor as a key figure for the heat formation is thus preferred, in particular in the case of the above-mentioned dynamic structural parts.

For heat formation, the polymer used must also be taken into consideration, since it contributes to the heat formation already because of its dynamic properties. Thus, a low glass transition temperature T_{g} leads to a lower loss factor.

In rubber compounds for dynamic structural parts, predominantly industrial carbon blacks with low specific surface area are used with the purpose of minimizing heat formation. Heat formation, or the loss factor, may be reduced by a lower degree of filling of the reinforcing filler, larger particles of the reinforcing filler in the unit of volume under consideration, and/or a larger distance of the reinforcing particles in the unit of volume. The volume filling ratio can be reduced with a high structurization of the industrial carbon black (expressed by the so-called compressed oil absorption number (COAN)) without affecting the hardness of the structural part.

However, this independence is not valid for all the parameters. In contrast, a reduction of the loss factor - in order to achieve a lowest possible heat formation - normally affects other properties of the vulcanized rubber composition, too. Increasing the cross-linking density also leads to a lower loss factor, regardless of the reinforcing filler. A higher cross-linking density however has adverse effects on the vulcanized rubber composition, for example with regard to its tearing properties (lower elongation at failure) and ageing properties.

A substantial issue with the reinforcing filler is the fact that a reduction of the loss factor is achieved at the expense of the dynamic stiffness: at a lower value for the loss factor tan delta, typically only a low dynamic stiffness can be observed. However, such a low dynamic stiffness leads to a higher deformation of the rubber composition at the same loads, and is thus disadvantageous, in particular for the employment of rubber compositions for the production of tires or their dynamic structural parts.

Thus, there is the need to provide a rubber composition that, after its vulcanization, has both a lowest possible loss factor and a highest possible dynamic stiffness, so that the conversion of mechanical energy into heat is minimized and the vulcanized rubber composition has only lowest possible deformations under load.

### Objective

The objective of the present invention is therefore to provide a vulcanizable rubber composition that, after its vulcanization, has a highest possible dynamic stiffness and, at the same time, a lowest possible heat formation, and that in particular allows these two parameters to be decoupled, so that the rubber composition can be adjusted more flexibly and better with regard to its performance to be achieved.

### Solution

This objective is achieved by the subject matters claimed in the patent claims as well as the preferred embodiments of these subject matters as described in the following specification.

A first subject matter of the present invention is a vulcanizable rubber composition comprising
a vulcanization system VS comprising in turn at least sulfur and/or at least one sulfur donor,
at least one rubber that is cross-linkable by means of sulfur and/or sulfur donor, with the proviso that if at least one halobutyl rubber is present, it is present in the rubber composition in an amount of <70 phr, and
at least one organic filler as a first filler F1, which is obtainable from lignin-containing biomass having a content of Klason-lignin of at least 60 wt.-%, based on its dry matter content, wherein organic filler F1
   is different from carbon black,
   has a ¹⁴C content in a range from 0.20 to 0.45 Bq/g of carbon,
   has a BET surface area in a range from >24.0 to 150 m²/g, and
   is present in the rubber composition in an amount in a range of from 1 to <140 phr,
wherein an amount of any optionally present carbon black in the rubber composition as at least one second filler F2 is <40 phr,
wherein an amount of any optionally present organosilane, which has at least one hydrolysable group and at least one sulfur atom, in the rubber composition is <7 phr,
except of vulcanizable rubber compositions VK1V2, VK1B1, VK2B1, VK2B2, VK2B3, VK2B4 und VK2B5 disclosed in the experimental part of PCT/EP2022/076858,
except of vulcanizable rubber composition VKV3 disclosed in the experimental part of PCT/EP2022/073490 (published as WO 2023/025808 A1), and
except of vulcanizable rubber compositions KV1VS, KI1VS, KI2VS and KI3VS disclosed in the experimental part of PCT/EP2022/073490 (published as WO 2022/243486 A1).

Another subject matter of the present invention is a kit of parts, comprising, in spatially separated form,
as part A), a rubber composition employed according to the invention containing at least the above-mentioned rubber and at least the above-mentioned filler F1, wherein part A) of the kit of parts however does not comprise sulfur and/or at least one sulfur donor of the vulcanization system VS employed according to the invention,
as part B), a vulcanization system VS employed according to the invention, comprising at least sulfur and/or at least one sulfur donor.

Another subject matter of the present invention is a vulcanized rubber composition that can be obtained by vulcanization of the vulcanizable rubber composition according to the invention or by vulcanization of a vulcanizable rubber composition obtainable by combining and mixing the two parts A) and B) of the kit of parts according to the invention.

Another subject matter of the present invention is a use of the vulcanizable rubber composition according to the invention, of the kit of parts according to the invention or of the vulcanized rubber composition according to the invention for employment in the production of tires, preferably in the production of pneumatic tires and solid tires, and of tire components, preferably in the production of such tire components for which a lowest possible tan delta value for the vulcanized rubber compositions used in their production is targeted, such as for example rubber compositions comprising natural rubber(s) and/or rubbers having a low glass transition temperature T_{g}, in particular in the production of tire components selected from the group of base components, i.e., components under the tread, shoulder strips (wings), cap-plies, belts, beads and/or bead reinforcements, or for employment in the production of rubber articles, such as technical rubber articles, preferably of drive belts, straps/belts, molded parts such as buffers/cushions, bearings/mounts, such as hydromounts, conveyor belts, profiles, seals, rings and/or hoses.

Another subject matter of the present invention is a tire, preferably a pneumatic tire or solid tire, or a rubber component or a rubber article, such as a technical rubber article, respectively produced employing the vulcanizable rubber composition according to the invention, the kit of parts according to the invention or the vulcanized rubber composition according to the invention, wherein preferably in the case of rubber components these are selected from base components, i.e., components under the tread, shoulder strips (wings), cap-plies, belts, beads and/or bead reinforcements, and wherein, in the case of rubber articles such as technical rubber articles, these preferably are selected from drive belts, straps/belts, molded parts such as buffers/cushions, bearings/mounts, such as hydromounts, conveyor belts, profiles, seals, rings and/or hoses.

Another subject matter of the present invention is a use of the organic filler F1 for increasing the dynamic stiffness, lowering the tan delta value, or both, of vulcanized rubber compositions being obtainable from vulcanizable rubber compositions containing the organic filler F1, preferably being obtainable from vulcanizable rubber compositions according to the present invention, in particular when compared to vulcanizable rubber compositions not containing the organic filler F1, but carbon black as filler.

Surprisingly, it has been found that the rubber composition according to the invention has high dynamic stiffness and at the same time a low tan delta value. With the better decoupling of these two properties, especially in comparison to rubber compositions containing industrial carbon black in an amount of ≥40 phr, a more flexible and better adjustment of the targeted performance of the rubber composition can be achieved.

Specifically, the use of organic filler F1 employed according to the invention and optionally carbon black such as industrial carbon black, however, the latter one in a maximum amount of <40 phr only, leads to an improvement in the performance of the rubber composition. By the (partial) replacement of industrial carbon black with the filler employed according to the invention, the tan delta value can be reduced while the dynamic stiffness at least remains unchanged. Surprisingly, higher dynamic stiffness can be achieved by making use of organic filler F1, in addition to a further reduction of the tan delta value, compared to rubber compositions containing carbon black in an amount of ≥40 phr. Further, it has surprisingly been found that often an equal to higher elongation at failure is achieved (as compared to vulcanized rubber compositions containing carbon black as additional filler in an amount ≥40 phr). Furthermore, the hardness of the rubber composition was not adversely affected. The use of the organic filler F1 employed according to the invention is advantageous in particular for rubber compositions cross-linked by means of sulfur.

The use of the organic filler F1 according to the invention is also highly advantageous from an environmental point of view. During the production of industrial carbon black, large quantities of CO₂ are released in the production process. The filler F1 according to the invention thus represents an environmentally friendly filler alternative, and moreover has - in contrast to industrial carbon black - no effect on the color of the rubber compositions.

### Detailed Description

The term "comprising" as used in the present invention in connection with, for example, the vulcanizable rubber compositions according to the invention and the process steps or stages of processes described herein preferably has the meaning "consisting of." In this context, for example, with regard to the vulcanizable rubber composition according to the invention, one or more of the further constituents optionally contained that are mentioned herein below may also be contained therein - in addition to the constituents mandatorily present therein. All the constituents may be present in each of their preferred embodiments mentioned below. With regard to the processes according to the invention and described herein, these may have further optional process steps and stages in addition to the mandatory steps and/or stages.

The amount of all the compositions described herein, such as the constituents contained in the vulcanizable rubber compositions according to the invention (comprising in each case all the mandatory constituents and, moreover, all the optional constituents), add up in total to 100% by weight in each case.

### Vulcanizable rubber composition

The vulcanizable rubber composition according to the invention comprises a vulcanization system VS comprising in turn at least sulfur and/or at least one sulfur donor, at least one rubber, that is cross-linkable by means of sulfur and/or sulfur donor, with the proviso that if at least one halobutyl rubber is present, it is present in the rubber composition in an amount of <70 phr, and at least one organic filler as a first filler F1, wherein an amount of any optionally present carbon black in the rubber composition as at least one second filler F2 is <40 phr, and wherein an amount of any optionally present organosilane, which has at least one hydrolysable group and at least one sulfur atom, in the rubber composition is <7 phr. Certain vulcanizable rubber compositions are excluded, namely vulcanizable rubber compositions VK1V2, VK1B1, VK2B1, VK2B2, VK2B3, VK2B4 und VK2B5 disclosed in the experimental part of PCT/EP2022/076858, and vulcanizable rubber composition VKV3 disclosed in the experimental part of PCT/EP2022/073490 (published as WO 2023/025808 A1).

Preferably, vulcanizable rubber compositions R-FPM2, R-OF2 and R-OF3 disclosed in the experimental part of European patent application no. 22 208 442.8 are excluded as well.

Vulcanizable rubber compositions KV1VS, KI1VS, KI2VS and KI3VS disclosed in the experimental part of PCT/EP2022/073490 (published as WO 2022/243486 A1) are excluded as well.

The phr (parts per hundred parts of rubber by weight) specification used herein is the quantity specification commonly used in the rubber industry for compound formulations. The dosage of the parts by weight of the individual constituents is always based on 100 parts by weight of the total mass of all rubbers present in the compound.

Preferably, no covalent bonding via at least part of the oxygen atoms of at least one functional group selected from phenolic OH-groups, phenolate groups, aliphatic OH groups, carboxylic acid groups, carboxylate groups and mixtures thereof, of the organic filler F1 and/or via at least part of the carbon atoms of organic filler F1, which are in the ortho-position to phenolic OH-groups and/or phenolate groups, has taken place to one more organic modification agents, in particular not to any organic modification agents containing at least one organic residue which, prior to bonding to the organic filler F1, comprised at least one functional group RFG, by means of which the bonding to the organic filler has been effected, and which is reactive towards the at least one functional group of the organic filler F1 and/or towards the carbon atoms being in ortho-position to the phenolic OH-groups and/or phenolate groups, and wherein the at least one reactive functional group RFG does not contain any silicon atoms and is selected from the group consisting of acid groups and salts, anhydrides, halides and esters thereof, acid groups, epoxide groups, thiirane groups, alcohol groups, thiol groups, thioester groups, aldehyde groups, isocyanate groups and mixtures thereof.

As mentioned hereinbefore, the inventive rubber composition may contain carbon black such as one or more kinds of industrial carbon black optionally as a second filler F2. However, if any kind of carbon black is additionally present besides organic filler F1, its amount in the rubber composition is less than 40 phr. Preferably, the amount of any optionally present carbon black in the rubber composition as at least one second filler F2 is in a range of from 0 to <39 phr, more preferably of from 0 to 35 phr, yet more preferably of from 0 to 30 or of from 0 to <30 phr, even more preferably of from 0 to ≤29 phr, still more preferably of from 0 to 25 phr, even more preferably of from 0 to 20 or to 15 phr, still more preferably of from 0 to 10 or to 5 phr. Alternatively, the amount of any optionally present carbon black in the rubber composition as at least one second filler F2 is preferably in a range of from 0.01 or 0.1 or 1 to <39 phr, more preferably of from 0.01 or 0.1 or 1 to 35 phr, yet more preferably of from 0.01 or 0.1 or 1 to 30 or of from 0.01 or 0.1 or 1 to <30 phr, even more preferably of from 0.01 or 0.1 or 1 to ≤29 phr, more preferably of from 0.01 or 0.1 or 1 to 25 phr, even more preferably of from 0.01 or 0.1 or 1 to 20 or to 15 phr, still more preferably of from 0.01 or 0.1 or 1 to 10 or to 5 phr. Most preferably the rubber composition does not or essentially does not contain any carbon black as second filler F2. The term "essentially not" in this context means that at least on purpose no carbon black is added to the rubber composition, but that it may not be ruled out that any carbon black residues/contaminations may be nonetheless present in small amounts of, e.g., <1 wt.-% or <0.5 wt.-% or <0.1 wt.-% or <0.01 wt.-% or <0.001 wt.-%, based on the total weight of the rubber composition.

Preferably, the relative weight ratio of organic filler(s) F1 to any carbon black as filler(s) F2, if present, is in a range of from to 50:1 or 49:1 to 1:2, more preferably of from 40:1 to 1:1.75, yet more preferably of from 30:1 to 1:1.50, even more preferably of from 25:1 to 1:1.25, still more preferably of from 20:1 to 1:1, yet more preferably of from 15:1 to >1:1, or in that the rubber composition is free or essentially free of any carbon black as filler(s) F2. The term "essentially free" in this context means that the amount of any carbon black being present as filler(s) F2 in the rubber composition is lower than 2.0 wt.-%, preferably lower than 1.5 wt.-%, more preferably lower than 1.0 wt.-%, still more preferably lower than 0.5 wt.-%, based on the total combined weight of both organic filler(s) F1 and carbon black filler(s) F2 being present in the rubber composition.

As mentioned hereinbefore, the inventive rubber composition may optionally contain at least one organosilane, which has at least one hydrolysable group and at least one sulfur atom. However, if any kind of such an organosilane is present, its amount in the rubber composition is less than 7 phr. Preferably, the amount of any optionally present organosilane, which has at least one hydrolysable group and at least one sulfur atom, in the rubber composition is <5 phr, more preferably the rubber composition does not or essentially does not contain any organosilane, which has at least one hydrolysable group and at least one sulfur atom, even more preferably in that the rubber composition does not or essentially does not contain any kind of organosilane. The term "essentially not" in this context means that at least on purpose no organosilane, which has at least one hydrolysable group and at least one sulfur atom, or no organosilane of any kind, is added to the rubber composition, but that it may not be ruled out that such organosilane residues/contaminations may be nonetheless present in small amounts of, e.g., <0.5 wt.-% or <0.25 wt.-% or <0.1 wt.-% or <0.01 wt.-% or <0.001 wt.-%, based on the total weight of the rubber composition.

### Vulcanization system VS

The vulcanization system VS of the vulcanizable rubber composition according to the invention comprises at least sulfur and/or at least one sulfur donor. The sulfur donor releases sulfur under vulcanization conditions. Sulfur serves as a cross-linking agent for polymers, both if it is directly contained in the vulcanization system VS and also after being released from the sulfur donor used.

By the presence of the vulcanization system VS and the sulfur contained therein, and/or the at least one sulfur donor, the vulcanizable rubber compositions according to the invention can be vulcanized.

Typically, elemental sulfur in the form of S₈ rings is used for the cross-linking by means of sulfur. The S₈ ring is either opened thermically or by alkaline substances. The sulfur may be present in the rubber composition as soluble or insoluble sulfur. The term accelerator refers to alkaline organic compounds that activate the ring opening. As an alternative or in addition to elemental sulfur, at least one sulfur donor may be employed. In this case, sulfur is released from such sulfur donors during vulcanization only. Examples for sulfur donors are sulfur-containing chemical compounds such as 4.4'-dithiodimorpholine (DTDM) and tetramethylthiuram disulfide (TMTD), which can be employed in dosages in a range from 0.5 to 2.0 phr, for example in a quantity of 1.5 phr (DTDM) or of 1.0 phr (TMTD).

The proportion of sulfur and/or sulfur donor in the rubber composition according to the invention is preferably in a range from 0.25 to 10 phr, particularly preferably 0.25 to 7 phr, more particularly preferably 0.5 to 5 phr, most preferably 1 to 3 or to 2 phr.

Preferably, the vulcanization system VS comprises at least one accelerator for the cross-linking by means of sulfur. The sulfur donors cited above are also suitable as such accelerators if the vulcanization system VS contains sulfur as the cross-linking agent. Preferably, the at least one accelerator is selected from the group consisting of dithiocarbamates, xanthogenates, thiurams such as thiuram monosulfide and/or thiuram disulfide and/or tetrabenzyl thiuram disulfide (TBzTD), thiazoles such as 2-mercaptobenzothiazole and/or dibenzothiazyl disulfide, sulfenamides such as N-cyclohexyl-2-benzothiazyl-sulfenamide (CBS) and/or 2-morpholinothiobenzothiazole and/or N-tert-butyl-2-benzothiazyl sulfenamide, guanidines such as N,N'-diphenylguanidine, thioureas, dithiophosphates, dipentamethylene thiuram tetrasulfide, , caprolactam disulfide, and mixtures thereof, and more particularly preferably is selected from the group consisting of N-tert-butyl-2-benzothiazyl-sulfenamide, and N,N'-diphenylguanidine as well as mixtures thereof.

The proportion of the at least one accelerator in the rubber composition according to the invention preferably is 0.1 to 10 phr, particularly preferably 0.2 to 8 phr, more particularly preferably 0.2 to 6 phr, most preferably 0.2 to 3 phr.

The vulcanization system VS of the vulcanizable rubber composition according to the invention may contain other vulcanizing agents then sulfur and/or sulfur donors, and/or additives promoting vulcanization such as zinc oxide and/or fatty acids, such as, e.g., stearic acid.

The vulcanization system VS of the vulcanizable rubber composition according to the invention may contain one or more additives that promote vulcanization, but cannot initiate it by themselves. Such additives include, for example, vulcanization accelerators such as saturated fatty acids with preferably 12 to 24, particularly preferably 14 to 20 and most preferably 16 to 18 carbon atoms, such as stearic acid and the zinc salts of the aforementioned fatty acids.

If additives promoting vulcanization, and in particular the above-mentioned fatty acids and/or their zinc salts, preferably stearic acid and/or zinc stearate, are employed in the rubber compositions according to the invention, their proportion is preferably 0 to 10 phr, particularly preferably 1 to 8 phr and most preferably 1.5 to 5 phr.

The vulcanization system VS of the vulcanizable rubber composition according to the invention may moreover contain one or more further vulcanizing agents that differ from sulfur and/or sulfur donors, such as preferably zinc oxide. It is particularly preferred to employ such vulcanizing agents of the vulcanization system VS in addition to sulfur and/or sulfur donors.

If other vulcanizing agents such as zinc oxide are employed in the rubber compositions according to the invention, their proportion preferably is 0 to 10 phr, particularly preferably 1 to 8 phr and most preferably 2 to 5 phr.

It is also possible to add peroxide as another cross-linking agent to the vulcanization system VS, in addition to at least the sulfur used and/or the at least one sulfur donor. This, however, is not preferred.

Vulcanization of the rubber composition of the present invention preferably is effected using sulfur and/or the at least one sulfur donor, particularly preferably using sulfur in combination with zinc oxide and/or at least one fatty acid, particularly preferably using sulfur and/or the at least one sulfur donor, more particularly preferably using sulfur in combination with zinc oxide and at least one fatty acid.

### Rubber

The vulcanizable rubber composition according to the invention comprises at least one rubber that is cross-linkable by the vulcanization system VS by means of sulfur and/or a sulfur donor, with the proviso that if at least one halobutyl rubber such as brominated isobutylene isoprene rubber (BIIR) and/or chlorinated isobutylene isoprene rubber (CIIR) is present, it is present in the rubber composition in an amount <70 phr, preferably in an amount <65 phr, more preferably in an amount <60 phr, even more preferably in an amount <55 phr or <50 phr or <45 phr or <40 phr, yet more preferably in an amount <35 phr or <30 phr or <25 phr or <20 phr or <15 phr or <10 phr or <5 phr. Most preferably, no halobutyl rubber is present at all in the rubber composition, i.e., in this case the at least one rubber is selected from suitable rubbers except of halobutyl rubbers.

Any kind of rubber is suitable for the production of the rubber composition according to the invention, as long as it can be cross-linked by means of sulfur and/or at least one sulfur donor. Suitable rubbers are diene rubbers, in particular diene rubbers selected from the group consisting of natural rubber (NR), synthetical natural rubber, in particular isoprene rubber (IR), ethylene propylene diene monomer rubber (EPDM), styrene butadiene rubber (SBR), solution-polymerized styrene butadiene rubber (SSBR), emulsion-polymerized styrene butadiene rubber (ESBR), functionalized SBR, in particular functionalized SSBR, butadiene rubber (BR), chloroprene rubber (CR), acrylonitrile butadiene rubber (NBR; nitrile rubber), isobutylene isoprene rubber (IIR), brominated isobutylene isoprene rubber (BIIR), chlorinated isobutylene isoprene rubber (CIIR), as well as mixtures thereof.

Preferably, a functionalized diene rubber such as SSBR has one or more functional groups in one or more side chains and/or end groups, wherein the at least one functional group preferably is selected from polar groups, in particular selected from the group consisting of carboxyl, hydroxy, amino, carboxylic acid ester, carboxylic acid amide or sulfonic acid groups and mixtures thereof. Functionalized SSBR is known from the patent application DE 10 2008 052 116 A1, among others.

Preferably, the at least one rubber is a natural rubber (NR), ethylene propylene diene monomer rubber (EPDM), solution-polymerized styrene butadiene rubber (SSBR), emulsion-polymerized styrene butadiene rubber (ESBR) or butadiene rubber, or a mixture of at least two of the above-mentioned rubbers. Particularly preferred as the rubber is a natural rubber (NR).

### Organic filler F1

The organic filler F1 is obtainable from lignin-containing biomass having a content of Klason-lignin of at least 60 wt.-%, based on its dry matter content, is different from carbon black, has a ¹⁴C content in a range from 0.20 to 0.45 Bq/g of carbon, has a BET surface area in a range from >24.0 to 150 m²/g, and is present in the rubber composition in an amount in a range of from 1 to <140 phr.

Since the filler F1 employed according to the invention filler is of organic nature, inorganic fillers such as precipitated silicas do not fall under this category. Further, since organic filler F1 is different from any kind of carbon black materials, carbon blacks also do not fall under this category.

The terms filler and organic filler in particular are known to the person skilled in the art. Preferably, the organic filler F1 employed according to the invention is a reinforcing filler, i.e., an active filler. Reinforcing or active fillers are characterized by a higher specific surface area than inactive fillers and, in contrast to inactive (non-reinforcing) fillers, they can change the viscoelastic properties of a rubber by interacting with the rubber within a rubber composition. For example, they can influence the viscosity of the rubbers and can improve elongation under tension and the fracture behavior of the vulcanizates, for example with regard to tear strength, tear propagation resistance and abrasion. Inactive fillers, on the other hand, dilute the rubber matrix and lead, for example, to a reduction in fracture energy.

The organic filler F1 employed according to the invention has a ¹⁴C content in a range from 0.20 to 0.45 Bq/g of carbon, preferably 0.23 to 0.42 Bg/g of carbon. The required ¹⁴C content cited above is achieved by organic fillers obtained from biomass, by further treatment or reaction, preferably by fractioning, wherein the fractioning can be carried out thermally, chemically and/or biologically, and preferably is carried out thermally and chemically. Thus, fillers obtained from fossil materials, such as fossil fuels in particular, do not fall under the definition according to the present invention of the fillers to be used according to the invention, since they do not possess a corresponding ¹⁴C content.

Biomass is in principle defined herein as any biomass, wherein the term "biomass" herein includes so-called phytomass, i.e., biomass originating from plants, zoomass, i.e., biomass originating from animals, and microbial biomass, i.e., biomass originating from microorganisms including fungi, the biomass is dry biomass or fresh biomass, and it originates from dead or living organisms. The biomass particularly preferred herein for the production of the fillers is phytomass, preferably dead phytomass. Dead phytomass comprises, among other things, dead, rejected, or detached plants and their parts. These include, for example, broken and torn leaves, cereal stalks, side shoots, twigs and branches, the fallen leaves, felled or pruned trees, as well as seeds and fruits and parts derived therefrom, but also sawdust, wood shavings/chips and other products derived from wood processing.

The organic filler F1 employed according to the invention has a BET surface area (specific total surface area according to Brunauer, Emmett and Teller) in a range from >24.0 to 150 m²/g or of from >24.0 to 149 m²/g, preferably in a range from 25 to 150 m²/g, particularly preferably in a range from 25 to 140 or to 130 or to 120 m²/g, in particular preferably in a range from 30 or 35 to 110 m²/g, most preferably in a range from 40 to 100 m²/g. The method for the determination of the BET surface area is cited in the 'Methods' section hereinbelow.

Preferably, the organic filler F1 has an STSA surface area that differs from its BET surface area by at most 20%, more preferably by at most 15%, yet more preferably by at most 10%, even more preferably by at most 7.5%, still more preferably by at most 6.5 or 5.0%.

A person skilled in the art is aware that a particle surface such as the surface of a particulate material such as organic filler F1 is composed of an outer and an inner surface. The associated measurement quantity is the specific surface area. The specific surface area can be measured as the outer surface area by means of statistical thickness surface area (STSA surface area), or as total surface area comprising outer and inner surface area by means of nitrogen surface area according to Brunauer, Emmett and Teller (BET surface area). The difference between inner and outer surface area substantially results from the porosity of the material. Beside the surface surrounding the particles, the inner surface area also relates to the surface present in pores. A coarsely divided material, which has a comparatively small outer (i.e., STSA) surface area, nevertheless can have a large total (i.e., BET) surface area (comprising outer and inner surface area), when it is highly porous. The difference between BET surface area and STSA surface area is thus the porosity. The smaller the difference is, the less porous the material.

Preferably, the organic filler F1 has an STSA surface area in a range from in a range of from >20 or >22 or >23 or 24 to <150 m²/g, preferably from 20 or >22 or >23 or 24 to 130 m²/g, particularly preferably from 25 to 120 m²/g, more particularly preferably from 30 to 110 m²/g, in particular from 40 to 100 m²/g, most preferably from 40 to <100 m²/g. A method for the determination of the STSA surface area (Statistical Thickness Surface Area) is cited in the 'Methods' section hereinbelow.

Preferably, the organic filler F1 has a pore volume of <0.1 cm³/g, further preferably of <0.01 cm³/g, particularly preferably of <0.005 cm³/g.

The organic filler F1 employed according to the invention preferably has a d99 value of <25 µm, even more preferably <20 µm, particularly preferably <18 µm, more particularly preferably <15 µm, even more preferably <12 µm, even more preferably <10 µm, even more preferably <9 µm, still more preferably <8 µm. The method for the determination of the d99 value is described hereinbelow in the 'Methods' section and is carried out by means of laser diffraction according to ISO 13320:2009. The d90 and d25 values cited hereinafter are also determined in the same way. The person skilled in the art will be aware that the organic filler F1 employed according to the invention is present in the form of particles such as in the form of particulate carbon material, and that the average particle size (average grain size) of these particles is described by the aforementioned d99 value, and by the d90 and d25 values also mentioned above.

Preferably, the organic filler F1 has a d90 value of <7.0 µm, particularly preferably of <6.0 µm, and/or preferably has a d25 of <3.0 µm, particularly preferably of <2.0 µm, preferably determined by means of laser diffraction according to ISO 13320:2009, respectively.

Preferably, the organic filler F1 has an oxygen content in a range from >8% by weight to <30% by weight, particularly preferably from >10% by weight to <30% by weight, more particularly preferably from >15% by weight to <30% by weight, most preferably from >20% by weight to <30% by weight, relative to the ash-free and water-free filler, respectively. The oxygen content can be determined by high-temperature pyrolysis, for example using the EuroEA3000 CHNS-O Analyzer of the company EuroVector S.p.A.

Preferably, the organic filler F1 has a carbon content in a range from >60% by weight to <90% by weight, particularly preferably from >60% by weight to <85% by weight, more particularly preferably from >60% by weight to <82% by weight, most preferably from >60% by weight to <80% by weight, relative to the ash-free and water-free filler, respectively. The method for the determination of the carbon content is cited in the 'Methods' section hereinbelow. In this respect, the organic filler F1 differs both from carbon blacks, such as industrial carbon blacks, made of fossil raw materials, as well as from carbon blacks made of regrowing raw materials, since carbon blacks have a corresponding carbon content of at least 95% by weight.

Preferably, the organic filler F1 has at least one kind of functional groups that is selected from phenolic OH groups, phenolate groups, aliphatic OH groups, carboxylic acid groups, carboxylate groups and mixtures thereof.

Preferably, the organic filler F1 has a pH value in a range from 7 to 9, particularly preferably in a range from > 7 to < 9, more particularly preferably in a range from > 7.5 to < 8.5.

Preferably, the organic filler F1 employed according to the invention is a lignin-based filler, wherein preferably the organic filler F1 is present in a form that is obtainable by means of hydrothermal treatment of the lignin-containing biomass, wherein the hydrothermal treatment preferably has been carried out at a temperature in a range from >100 °C to <300 °C, particularly preferably from >150 °C to <250 °C.

Hence, the organic filler F1 employed according to the invention is a lignin-based organic filler produced from biomass and/or biomass components. For example, the lignin for the production of the lignin-based organic filler F1 may be isolated and extracted from biomass and/or dissolved. Suitable processes for obtaining the lignin for the production of the lignin-based organic filler from biomass are, for example, hydrolytic processes or pulping processes, such as the Kraft pulping process. The term "lignin-based" as used in the present invention preferably means that one or more lignin moieties and/or one or more lignin scaffolds are present in the organic filler F1 employed according to the invention. Lignins are solid biopolymers that are incorporated into plant cell walls and thus effect the lignification of plant cells. As such, they are present in biomass and in particular in biologically regrowing raw materials, and they therefore represent - in particular in hydrothermally treated form - an environmentally friendly filler alternative.

Preferably, the lignin, and preferably the organic filler F1 employed according to the invention as such is present at least partially in hydrothermally treated form, and is particularly preferably obtainable by means of hydrothermal treatment, respectively. Particularly preferably, the organic filler employed according to the invention is based on lignin that can be obtained by hydrothermal treatment. Suitable processes for the hydrothermal treatment, in particular of lignins and lignin-containing organic fillers, are described in WO 2017/085278 A1 and WO 2017/194346 A1 as well as in EP 3 470 457 A1, for example. Preferably, the hydrothermal treatment is carried out at temperatures of >100 °C to <300 °C, particularly preferably >150 °C to <250 °C, in the presence of liquid water. Preferably, the organic filler is a lignin-based filler, wherein preferably at least the lignin and even more preferably, the organic filler as such, is present at least partially in a form that can be obtained by means of hydrothermal treatment, and particularly preferably can be obtained by means of hydrothermal treatment, wherein the hydrothermal treatment preferably has been carried out at a temperature in a range from >100 °C to <300 °C, particularly preferably from >150 °C to <250 °C.

Optionally, the starting material used for the hydrothermal treatment, such as a lignin-containing raw material, in particular a lignin, can be reacted with at least one crosslinker before the hydrothermal treatment is carried out. The crosslinker preferably has at least one functional group which can react with the crosslinkable groups of the lignin. Preferably, the crosslinker has at least one functional group selected from aldehyde, carboxylic acid anhydride, epoxide, hydroxyl and isocyanate groups or a combination thereof. Preferably, the crosslinker is selected from aldehydes, epoxides, acid anhydrides, polyisocyanates and/or polyols, in particular from aldehydes such as formaldehyde, furfural and/or sugar aldehydes. The crosslinker can react with free ortho and para positions of the phenolic rings, with aromatic and aliphatic OH groups, and/or with carboxyl groups of the lignin.

Preferably, the organic filler F1 is a particulate carbon material from or obtainable from lignin-containing biomass as lignin-containing raw material, in particular lignin-containing phytomass, more preferably from lignin-containing phytomass. The organic filler F1 is obtainable from lignin-containing biomass having a content of Klason-lignin of at least 60 wt.-%, based on its dry matter content. Preferably, the lignin-containing biomass such as the lignin-containing phytomass has a content of Klason-lignin, based on its dry matter content, of at least 65% by weight, preferably of at least 70% by weight, even more preferably of at least 75% by weight, particularly preferably of at least 80% by weight, especially of at least 85% by weight. According to Tappi T 222 om-02 (https://www.tappi.org/content/SARG/T222.pdf), Klason-lignin describes an analytical measurement after treatment in 72% H₂SO₄ and is the product to be quantified in this analytical method. The method is further described in the 'method' section.

Preferably, the organic filler F1, in particular when it is a particulate material such as a particulate carbon material, is obtainable by hydrothermal treatment, wherein during the hydrothermal treatment preferably no salts, in particular no metal halides such as zinc chloride and/or potassium chloride and/or sodium chloride, have been added on purpose to the raw material such as lignin-containing raw material used as starting material for the hydrothermal treatment. Preferably, salts such as metal halides, e.g., zinc chloride and/or potassium chloride and/or sodium chloride are only present during hydrothermal treatment in amounts, which are naturally present in the water such as tap water used for performing the hydrothermal treatment.

The organic filler F1 is present in the rubber composition in an amount in a range of from 1 to <140 phr. Preferably, the organic filler F1 is present in the rubber composition in an amount in a range of from 1 to 139 or 1 to 138 phr, preferably of from 5 to 130 or to 115 phr, particularly preferably of from 10 to 100 or to 80 phr, more particularly preferably of from 15 to 70 phr, most preferably of from 15 to 60 phr or of from 20 to 55 phr.

In addition to the at least one organic filler F1 employed according to the invention, as mentioned hereinbefore, the rubber composition may contain one or more other fillers that differ from the organic filler F1 employed according to the invention.

In the case that the organic filler employed according to the invention serves only as a partial replacement of common industrial carbon blacks, the rubber compositions according to the invention may also contain industrial carbon blacks, in particular furnace carbon blacks, as classified as general-purpose carbon blacks under ASTM Code N660 or under ASTM Code N550, for example, as second filler(s) F2. However, if such carbon blacks are present, their maximum amount in the rubber composition is <40 phr.

In addition, or as an alternative, the rubber compositions according to the invention can contain in particular inorganic fillers as third filler(s) F3, for example those having different particle size, particle surface and chemical nature with different potential to influence specific properties, but in particular the processing behavior (rheology). In the event that further fillers F3 are included, these should preferably have properties as similar as possible to the organic fillers F1 used in the rubber composition according to the invention, especially with regard to their pH values.

If other fillers F3 are employed, they are preferably phyllosilicates such as clay minerals, for example talc; carbonates such as calcium carbonate; silicates such as for example calcium, magnesium, and aluminum silicates; and oxides such as for example magnesium oxide and silica or silicic acid.

In particular in the case that the organic filler F1 employed according to the invention serves only as a partial replacement for common silicic acids or silica, the rubber compositions according to the invention may also contain such inorganic fillers F3 such as silica or silicic acid.

In the context of the present invention, zinc oxide does not fall under the inorganic fillers F3, since zinc oxide is taking the task of an additive promoting vulcanization. Additional fillers must be chosen with care, however, since silica tends to bind organic molecules to its surface and thus inhibit their action.

### Other constituents of the vulcanizable rubber composition

As mentioned hereinbefore, the inventive rubber composition may optionally contain at least one organosilane, which has at least one hydrolysable group and at least one sulfur atom. However, if any kind of such an organosilane is present, its amount in the rubber composition is less than 7 phr.

If such an organosilane is present, the at least one sulfur atom is preferably part of a non-hydrolysable organic radical of the organosilane, or is covalently bound to such radical in the form of a functional group, such as a thiol group, and in particular the at least one sulfur atom is part of an aliphatic organic radical of the organosilane, or is covalently bound to such radical in the form of a functional group, such as a thiol group.

If such an organosilane is present, the at least one organosilane is preferably a compound of the general formula (I) and/or (II)

Si(X)_{4-y}(R)_{y} (I),

(X)_{3-z}(T)_{z}Si-(RA)-Si(X)_{3-z}(T)_{z} (II)

wherein, in the case of the general formula (I),
X respectively and independently from one another represents a hydrolysable group that is reactive with phenolic OH groups, phenolate groups, aliphatic OH groups, carboxylic acid groups, carboxylate groups and/or mixtures of these groups, the hydrolysable group respectively and independently from one another representing an alkoxy group, and particularly preferably being selected from O-C₁₋₄ alkyl,
the parameter y represents an integer in the range of 1 to 3, however is at least 1, and preferably is exactly 1, and
R represents a non-hydrolysable organic radical, preferably an aliphatic C₃ to C₂₀ radical having at least one sulfur atom, wherein the sulfur atom preferably is part of at least one functional group that preferably is selected from the group consisting of thiol groups, blocked thiol groups, di- and/or polysulfide groups such as tetrasulfide groups, as well as mixtures thereof, more particularly preferably thiol groups,
wherein, in the case of the general formula (II),
X respectively and independently from one another represents a hydrolysable group that is reactive with phenolic OH groups, phenolate groups, aliphatic OH groups, carboxylic acid groups, carboxylate groups and/or mixtures of these groups, the hydrolysable group independently from one another representing an alkoxy group, and particularly preferably being selected from O-C₁₋₄ alkyl,
RA represents a non-hydrolysable organic radical with two bonds, preferably an aliphatic C₆ to C₂₀ radical with two bonds that contains at least one sulfur atom, preferably at least one disulfide and/or polysulfide group, particularly preferably a di- or tetrasulfide group,
the parameter z respectively represents an integer in the range of 0 to 2, preferably means 0 or 2 respectively, and
T represents a non-hydrolysable organic radical that is different from the radical RA and has no functional groups, and preferably is an aliphatic C₁ to C₂₀ radical, and particularly preferably does not contain a sulfur atom.

In the case of monosilanes of the general formula (I), it is preferred that at least one radical R is a mercaptoalkyl group, wherein R preferably is an aliphatic C₃ to C₈ radical, particularly preferably an aliphatic C₃ to C₆ radical, and that the monosilane has at least one group X, preferably two or three groups X.

Preferably, the monosilane of the general formula (I) is selected from der group consisting of 4-mercaptobutyltrialkoxysilane and/or 6-mercaptohexyltrialkoxysilane and/or 3-mercaptopropyltrialkoxysilane, wherein alkoxy groups preferably mean, independently from one another, methoxy or ethoxy groups.

Preferably, the at least one organosilane is a compound of the general formula (II). In the case of bis(silanes) of the general formula (II), it is preferred that the non-hydrolysable organic radical RA is an aliphatic C₆ to C₂₀ radical, particularly preferably an aliphatic C₆ to C₁₀ radical, and that RA has at least one sulfur atom. Particularly preferably, RA has a di- or polysulfide group, more particularly preferably a di- or tetrasulfide group. Preferably, the at least one sulfur atom is present within the radical RA, particularly preferably, the at least one sulfur atom is not adjacent to a silicon atom. Preferably, the bis(silane) of the general formula (II) has at least one group X, particularly preferably two or three groups X. Preferably, the bis(silane) of the general formula (II) is selected from the group consisting of bis(dimethylethoxysilylpropyl)tetrasulfide (DMESPT), bis(dimethylethoxysilylpropyl)-disulfide (DMESPD), bis(triethoxysilylpropyl)tetrasulfide (TESPT), bis(triethoxysilylpropyl)disulfide (TESPD) and mixtures thereof, particularly preferably, the bis(silane) of the general formula (II) is TESPT and/or TESPD, most preferably it is TESPD.

If such an organosilane is present, it is contained in the vulcanizable rubber composition according to the invention in a quantity that preferably lies in a range from 0.25 to <7 phr, particularly preferably 0.25 to 5 phr, more particularly preferably 0.5 to 3 phr. If such an organosilane is present, it is preferably contained in the vulcanizable rubber composition according to the invention in a quantity that lies, relative to the organic filler F1 contained therein, in a range from 1 to 10% by weight, particularly preferably 2 to 8% by weight, more particularly preferably 2.5 to 6% by weight, most preferably 3 to 6 or to 5% by weight.

The rubber composition according to the invention may contain further optional constituents, such as plasticizers/softening agents and/or antidegradants and/or light stabilizing waxes and/or resins, in particular resins that increase adhesion.

By employing softening agents, it is possible to influence properties of the non-vulcanized rubber composition, such as processability, in particular, but also properties of the vulcanized rubber composition, such as its flexibility, especially at low temperatures. Particularly suitable softening agents in the context of the present invention are mineral oils from the group of paraffinic oils (substantially saturated chain-shaped hydrocarbons) and naphthenic oils (substantially saturated ring-shaped hydrocarbons). It is also possible, and even preferred, to employ aromatic hydrocarbon oils. However, with regard to the adhesion of the rubber composition to other rubber-containing components in tires, such as for example the carcass, a mixture of paraffinic and/or naphthenic oils could also be advantageous as softening agent. Other possible softening agents are for example esters of aliphatic dicarboxylic acids, such as for example adipic acid or sebacic acid, paraffin waxes and polyethylene waxes. Among the softening agents, paraffinic oils and naphthenic oils are particularly suitable in the context of the present invention; most preferred are however aromatic oils, in particular aromatic mineral oils.

Preferably, softening agents, and among them particularly preferred the paraffinic and/or naphthenic and in particular aromatic process oils, are employed in a quantity of 0 to 10 phr, particularly preferably 1 to 8 phr, more particularly preferably 1 to 7 phr, most preferably 1 to 3 phr.

Preferably, chinolines such as TMQ (2,2,4-trimethyl-1,2-dihydrochinoline) and diamines such as 6-PPD (N-(1,3-dimethylbutyl)-N'-phenyl-p-phenylendiamine) or IPPD (N-isopropyl-N'-phenyl-p-phenylendiamine), are used as antidegradants, particularly preferably IPPD. Preferably, their proportion is 1 to 10 phr, particularly preferably 1 to 7 phr, more particularly preferably 1 to 5 phr, most preferably 1 to 2 phr.

Examples for light stabilizing waxes are Negozone 3457 from the H&R Group or the Antilux light stabilizing waxes from the company Rhein Chemie, such as Antilux 111 or Antilux 654. Preferably, their proportion is 0.25 to 10 phr, particularly preferably 0.5 to 7 phr, more particularly preferably 0.5 to 5 phr, most preferably 0.5 to 2 phr.

So-called adhesion-enhancing resins can be used to improve the adhesion of the vulcanized rubber compound of the present invention to other adjacent tire components. Particularly suitable resins are those based on phenol, preferably from the group consisting of phenolic resins, phenol-formaldehyde resins and phenol-acetylene resins. In addition to the phenolic-based resins, aliphatic hydrocarbon resins such as Escorez^{™} 1102 RM from the company ExxonMobil, as well as aromatic hydrocarbon resins, may also be used. Aliphatic hydrocarbon resins particularly improve adhesion to other rubber components of the tire. They generally have lower adhesion than the resins based on phenol and can be used either alone or as a mixture with the resins based on phenol. However, preferably such resins are not present, in particular not resins based on phenol.

If the adhesion-enhancing resins are used at all, then preferably those selected from the group consisting of resins based on phenol, aromatic hydrocarbon resins and aliphatic hydrocarbon resins. Preferably, their proportion is 0 to 15 phr, particularly preferably 1 to 15 phr, more particularly preferably 2 to 10 phr, most preferably 3 to 8 phr.

### Kit of parts

Another subject of the present invention is a kit of parts, comprising, or preferably consisting of, in spatially separated form,
as part A), a rubber composition employed according to the invention containing at least the above-mentioned rubber and at least the above-mentioned filler F1, wherein part A) of the kit of parts however does not comprise sulfur and/or at least one sulfur donor of the vulcanization system VS employed according to the invention,
as part B), a vulcanization system VS employed according to the invention, comprising at least sulfur and/or at least one sulfur donor.

Thus, part A) is not yet vulcanizable as such by means of sulfur, and thus at this point of time represents a rubber composition that is not vulcanizable by means of sulfur. The vulcanization by means of sulfur is only possible after mixing the parts A) and B), regardless of whether the sulfur is present per se and/or is only released from the at least one sulfur donor.

Preferably, rubber(s) and filler(s) of the rubber composition according to the invention on the one hand and the vulcanization system VS on the other hand are spatially separated from each other in the kit of parts and can thus be stored. The kit of parts serves for the preparation of a vulcanizable rubber composition. Thus, for example, the rubber composition constituting the one part of the kit of parts comprising rubber(s) and filler(s) and optionally other constituents, including vulcanizing agents different from sulfur, such as zinc oxide and/or at least one fatty acid, can be employed as part A) in stage 1 of the process further described hereinbelow for preparing a vulcanizable rubber composition, and the second part of the kit of parts, namely the vulcanization system VS as part B), comprising at least sulfur and/or at least one sulfur donor, can be employed in stage 2 of said process.

All preferred embodiments described hereinabove in connection with the vulcanizable rubber composition according to the invention are also preferred embodiments with regard to the kit of parts according to the invention.

Preferably, the kit of parts according to the invention comprises, as
part A) a rubber composition comprising the at least one rubber, the at least one organic filler F1, optionally further filler(s) such as filler(s) F2 and/or F3, optionally at least one organosilane, and as
part B) a vulcanization system VS comprising at least sulfur and/or at least one sulfur donor and in addition zinc oxide, wherein the zinc oxide may alternatively be present within part A).

Particularly preferably, the kit of parts according to the invention comprises, as
part A) a rubber composition comprising the at least one rubber, the at least one organic filler F1, and optionally further filler(s) such as filler(s) F2, and as part B) a vulcanization system comprising at least sulfur and/or at least one sulfur donor, a zinc oxide and at least one saturated fatty acid such as stearic acid and/or optionally zinc stearate, wherein at least zinc oxide and/or the fatty acid may alternatively be present within part A).

### Process for preparing the vulcanizable rubber composition

Another subject matter of the present invention is a process for preparing the vulcanizable rubber composition according to the invention.

All preferred embodiments described hereinabove in connection with the vulcanizable rubber composition according to the invention and the kit of parts according to the invention are also preferred embodiments with regard to the process according to the invention.

The preparation of the vulcanizable rubber composition according to the invention is carried out preferably in two stages, i.e., the stages 1 and 2.

In the first stage (stage 1), a rubber composition as a base mixture (masterbatch) is prepared first, by mixing all constituents employed for the preparation of the vulcanizable rubber composition according to the invention with each other, but without the sulfur and/or the at least one sulfur donor. In the second stage (stage 2), the sulfur and/or the at least one sulfur donor, and optionally additional constituents of the vulcanization system VS, are admixed to the rubber composition obtained after stage 1.

### Stage 1

Preferably, the at least one rubber contained in the rubber composition according to the invention, as well as resins different therefrom that may optionally be employed, are provided. However, the latter may alternatively also be added subsequently together with further additives. Preferably, the rubbers have at least room temperature (23 °C) or are particularly preferably preheated to temperatures of at maximum 50 °C, more particularly preferably at maximum 45 °C, and especially preferably at maximum 40 °C. Particularly preferably, the rubbers are pre-masticated for a short period of time before the other constituents are added. If inhibitors such as magnesium oxide are used for subsequent vulcanization control, they are preferably also added at this point of time.

Then at least one organic filler F1 employed according to the invention, and optionally further fillers such as filler(s) F2 and/or F3, are added, preferably with the exception of zinc oxide, since this is used as a constituent of the vulcanization system in the rubber compositions according to the invention, as mentioned hereinabove, and is therefore herein not regarded as a filler. The addition of the at least one organic filler F1 and optionally other fillers preferably is carried out in increments.

Advantageously, but not mandatorily, softening agents, at least one organosilane optionally employed and other constituents such as vulcanizing agents other than sulfur, such as stearic acid and/or zinc stearate and/or zinc oxide, are added only subsequently to the addition of the at least one organic filler F1 and/or the other fillers, if used. This facilitates the incorporation of the at least one organic filler F1, and if present, the other fillers. It may be advantageous, however, to incorporate a part of the organic filler F1, or, if present, of the other fillers, together with the softening agents and any other constituents optionally used.

The highest temperatures obtained during the preparation of the rubber composition in the first stage ("dump temperature") should not exceed 170 °C, since there is the possibility of partial decomposition of the reactive rubbers and/or the organic fillers above these temperatures. Depending in particular from the rubber employed, temperatures of > 170 °C, for example up to 200 °C, may however also be possible. Preferably, the maximum temperature in the preparation of the rubber composition of the first stage is between 80 °C and < 200 °C, particularly preferably between 90 °C and 190 °C, most preferably between 95 °C and 170 °C.

The mixing of the constituents of the rubber composition is usually carried out by means of internal mixers equipped with tangential or meshing (i.e., intermeshing) rotors. The latter usually allow for better temperature control. Mixers with tangential rotors are also referred to as tangential mixers. However, mixing can also be carried out using a double-roll mixer, for example. Depending on the rubber used, the mixing process can be carried out conventionally, starting with addition of the polymer, or upside down, that is, in the end after addition of all other constituents of the mixture.

After the preparation of the rubber composition is completed, it is preferably cooled down before carrying out the second stage. A process of this type is also referred to as relaxation. Typical relaxation periods are 6 to 24 hours, preferably 12 to 24 hours.

### Stage 2

In the second stage, at least sulfur and/or at least one sulfur donor, but preferably additional constituents of the vulcanization system VS, are incorporated into the rubber composition of the first stage, thereby obtaining a vulcanizable rubber composition according to the present invention. Preferably, the accelerators for the cross-linking by means of sulfur, if employed/present, are also incorporated in stage 2.

If zinc oxide and in addition optionally at least one saturated fatty acid such as stearic acid are employed as the vulcanization system in addition to sulfur and/or the at least one sulfur donor, the addition of all these constituents may take place in stage 2. It is however also possible to integrate these constituents, with the exception of sulfur and/or the at least one sulfur donor, into the rubber composition already in stage 1.

The highest temperatures obtained during the preparation of the admixture of the vulcanization system to the rubber composition in the second stage ("dump temperature") should preferably not exceed 130 °C, and particularly preferably not exceed 125 °C. A preferred temperature range lies between 70 °C and 125 °C, particularly preferably between 80 °C and 120 °C. At temperatures above the maximal temperatures for the cross-linking system of 105 °C to 120 °C, premature vulcanization might occur.

After admixing the vulcanization system in stage 2, the composition is preferably cooled down.

In the two-stage process mentioned hereinabove, a rubber composition is first obtained in the first stage that is then expanded to a vulcanizable rubber composition in the second stage.

Before vulcanization, the vulcanizable rubber compositions thus prepared may go through deformation processes that are preferably customized or tailored for the final articles. The rubber compositions may be formed into a suitable shape as required for the vulcanization process, preferably by extrusion or calendering. The vulcanization may be carried out in vulcanization molds by means of pressure and temperature, or the vulcanization is carried out without pressure in temperature-controlled channels in which air or liquid materials provide heat transfer.

### Vulcanized rubber composition

Another subject matter of the present invention is a vulcanized rubber composition that can be obtained by vulcanization of the vulcanizable rubber composition according to the invention or by vulcanization of a vulcanizable rubber composition obtainable by combining and mixing the two parts A) and B) of the kit of parts according to the invention.

All preferred embodiments described hereinabove in connection with the vulcanizable rubber composition according to the invention and the kit of parts according to the invention as well as with the process according to the invention are also preferred embodiments with regard to the vulcanized rubber composition according to the invention.

Typically, vulcanization is carried out under pressure and/or under the effect of heat. Suitable vulcanization temperatures preferably are 100 °C to 200 °C, particularly preferably 120 °C to 180 °C and most preferably 140 °C to 170 °C. Optionally, vulcanization is carried out at a pressure in the range of 50 bar to 300 bar. It is however also possible to carry out the vulcanization in a pressure range from 0.1 bar to 1 bar, for example in the case of profiles. The closing pressure of the press is typically in a range from 150 bar to 500 bar, depending on the mixture and the product geometry.

### Use of the vulcanizable rubber composition

Another subject matter of the present invention is a use of the vulcanizable rubber composition according to the invention, of the kit of parts according to the invention or the vulcanized rubber composition according to the invention for employment in the production of tires, preferably in the production of pneumatic tires and solid tires, and tire components, preferably in the production of such tire components for which a lowest possible tan delta value for the vulcanized rubber compositions used in their production is targeted, such as for example rubber compositions comprising natural rubber(s) and/or rubbers having a low glass transition temperature T_{g}, in particular in the production of tire components selected from the group of base components, i.e., components under the tread, shoulder strips (wings), cap-plies, belts, beads and/or bead reinforcements, or for employment in the production of rubber articles, such as technical rubber articles, preferably of drive belts, straps/belts, molded parts such as buffers/cushions, bearings/mounts, such as hydromounts, conveyor belts, profiles, seals, rings and/or hoses.

The term "technical rubber article" (also mechanical rubber goods, MRG) is known to the person skilled in the art. Examples for technical rubber articles are drive belts, straps/belts, molded parts such as buffers/cushions, bearings/mounts, in particular hydromounts, conveyor belts, profiles, seals, dampers and/or hoses.

All preferred embodiments described hereinabove in connection with the vulcanizable rubber composition according to the invention, the kit of parts according to the invention, the process according to the invention and the vulcanized rubber composition according to the invention are also preferred embodiments with regard to the abovementioned use according to the invention.

### Tires and tire components

Another subject matter of the present invention is a tire, preferably a pneumatic tire or solid tire, or a tire component, respectively produced employing the vulcanizable rubber composition according to the invention, the kit of parts according to the invention or the vulcanized rubber composition according to the invention, wherein preferably in the case of tire components, these are selected from base components, i. e. components under the tread, shoulder strips (wings), cap-plies, belts, beads and/or bead reinforcements,

All preferred embodiments described hereinabove in connection with the vulcanizable rubber composition according to the invention, the kit of parts according to the invention, the process according to the invention and the vulcanized rubber composition according to the invention as well as the use according to the invention are also preferred embodiments with regard to the abovementioned tires according to the invention.

### Rubber article, in particular technical rubber article

Another subject matter of the present invention is a rubber article, in particular a technical rubber article, preferably selected from drive belts, straps/belts, molded parts such as buffers/cushions, bearings/mounts, in particular hydromounts, conveyor belts, profiles, seals, rings and/or hoses, produced by employing the vulcanizable rubber composition according to the invention, the kit of parts according to the invention, or the vulcanized rubber composition according to the invention.

All preferred embodiments described hereinabove in connection with the vulcanizable rubber composition according to the invention, the kit of parts according to the invention, the process according to the invention and the vulcanized rubber composition according to the invention as well as the use according to the invention are also preferred embodiments with regard to the preferably technical rubber articles according to the invention.

### Use of the organic filler F1

Another subject matter of the present invention is a use of the organic filler F1, in particular without the additional presence of any organosilane, which has at least one hydrolysable group and at least one sulfur atom, for increasing the dynamic stiffness, in particular complex modulus G*, lowering the tan delta value, or both, preferably simultaneously, of vulcanized rubber compositions being obtainable from vulcanizable rubber compositions containing the organic filler F1, preferably simultaneously, preferably being obtainable from vulcanizable rubber compositions according to the present invention, in particular when compared to vulcanizable rubber compositions not containing the organic filler F1, but only carbon black as filler or carbon black as filler in an amount of ≥40 phr. Methods for determination of tan delta value and dynamic stiffness including complex modulus G* are described in the method section.

All preferred embodiments described hereinabove in connection with the vulcanizable rubber composition according to the invention, the kit of parts according to the invention, the process according to the invention and the vulcanized rubber composition according to the invention as well as the use according to the invention and the preferably technical rubber articles and tires and tire according to the invention are also preferred embodiments with regard to the inventive use of filler F1.

### Determination methods

### 1. Determination of the ¹⁴C content

The determination of the ¹⁴C content (content of biologically based carbon) is carried out by means of the radiocarbon method according to DIN EN 16640:2017-08.

### 2. Determination of the particle size distribution

The particle size distribution can be determined by laser diffraction of the material dispersed in water (1% by weight in water) according to ISO 13320:2009, with an ultrasound treatment of 12000 Ws being carried out before the measurement. The volume fraction is specified, for example, as d99 in µm (the diameter of the grains of 99% of the volume of the sample is below this value). The values d90 and d25 (in µm) are determined in the same way.

### 3. Determination of carbon content

The carbon content is determined by elemental analysis according to DIN 51732: 2014-7.

### 4. Determination of oxygen content

The oxygen content is determined by high-temperature pyrolysis using the EuroEA3000 CHNS-O analyzer of the company EuroVector S.p.A. In the process, the CHNS content is determined by means of the abovementioned analysis apparatus, and the oxygen is subsequently calculated as the difference (100 - CHNS).

### 5. Determination of dry matter content of the organic fillers employed

The dry matter content of the sample was determined along the lines of DIN 51718:2002-06 as follows. For this purpose, the MA100 moisture balance from the company Sartorius was heated to a dry temperature of 105 °C. The dry sample, if not already in powder form, was mortared or ground to a powder. Approximately 2 g of the sample to be measured was weighed on a suitable aluminum pan in the moisture balance and then the measurement was started. As soon as the weight of the sample did not change by more than 1 mg for 30 s, this weight was considered constant and the measurement was terminated. The dry matter content then corresponds to the displayed content of the sample in % by weight. At least one duplicate determination was performed for each sample. The weighted mean values were reported.

### 6. Determination of the pH Value of the organic fillers employed

The pH was determined along the lines of ASTM D 1512 standard as follows. The dry sample, if not already in powder form, was mortared or ground to a powder. In each case, 5 g of sample and 50 g of fully deionized water were weighed into a glass beaker. The suspension was heated to a temperature of 60 °C with constant stirring using a magnetic stirrer with heating function and stirring flea, and the temperature was maintained at 60 °C for 30 min. Subsequently, the heating function of the stirrer was deactivated so that the mixture could cool down while stirring. After cooling, the evaporated water was replenished by adding fully deionized water again and stirred again for 5 min. The pH value of the suspension was determined with a calibrated measuring instrument. The temperature of the suspension should be 23 °C (± 0.5 °C). A duplicate determination was performed for each sample and the averaged value was reported.

### 7. Determination of the ash content of the organic fillers

The water-free ash content of the samples was determined by thermogravimetric analysis in accordance with the DIN 51719 standard as follows: Before weighing, the sample was ground or mortared. Prior to ash determination, the dry substance content of the weighed-in material is determined. The sample material was weighed to the nearest 0.1 mg in a crucible. The furnace, including the sample, was heated to a target temperature of 815 °C at a heating rate of 9 ° K/min and then held at this temperature for 2 h. The furnace was then cooled to 300 °C before the samples were taken out. The samples were cooled to ambient temperature in the desiccator and weighed again. The remaining ash was correlated to the initial weight and thus the weight percentage of ash was determined. Triplicate determinations were performed for each sample, and the averaged value was reported.

### 8. Determination of the BET and STSA surface area of the organic fillers

The specific surface area of the filler to be investigated was determined by nitrogen adsorption according to the ASTM D 6556 (2019-01-01) standard provided for industrial carbon blacks. According to this standard, the BET surface area (specific total surface area according to Brunauer, Emmett and Teller) and the external surface area (STSA surface area; Statistical Thickness Surface Area) were also determined as follows.

The sample to be analyzed was dried to a dry matter content ≥ 97.5% by weight at 105 °C prior to the measurement. In addition, the measuring cell was dried in a drying oven at 105 °C for several hours before weighing in the sample. The sample was then filled into the measuring cell using a funnel. In case of contamination of the upper measuring cell shaft during filling, it was cleaned using a suitable brush or a pipe cleaner. In the case of strongly flying (electrostatic) material, glass wool was weighed in additionally into the sample. The glass wool was used to retain any material that might fly up during the bake-out process and contaminate the unit.

The sample to be analyzed was baked out at 150 °C for 2 hours, and the Al₂O₃ standard was baked out at 350 °C for 1 hour. The following N₂ dosage was used for the determination, depending on the pressure range:
p/p0 = 0 - 0.01: N₂ dosage: 5 ml/g
p/p0 = 0.01 - 0.5: N₂ dosage: 4 ml/g.

To determine the BET surface, extrapolation was performed in the range of p/p0 = 0.05 - 0.3 with at least 6 measurement points. To determine the STSA, extrapolation was performed in the range of the layer thickness of the adsorbed N₂ from t = 0.4 - 0.63 nm (corresponding to p/p0 = 0.2 - 0.5) with at least 7 measurement points.

### 9. Determination of hardness

The determination of the Shore A hardness of vulcanized rubber compositions was carried out in accordance with ISO 48-4:2018-08 at 23 °C, using the digital Shore hardness tester from the company Sauter GmbH. In order to reach the thickness of the test specimen of at least 6 mm, as required by the standard, the test specimen was composed of not more than three layers. For this purpose, 3 S2 bars, punched out to perform the tensile test according to ISO 37:2011, were stacked on top of each other. Five measurements were taken on each sample stack at different points on the stack. The results obtained represent the average value of these five measurements.

Between vulcanization and testing, the samples were stored for at least 16 h at room temperature in the laboratory.

### 10. Determination of cross-linking density / reaction kinetics

The cross-linking density and the reaction kinetics of the rubber compositions were determined according to DIN 53529-3:1983-06 at 160 °C, but at a deflection of 0.5 or 3 ° (according to the value respectively given in the experimental part). The measuring time was 30 min. In the process, the minimum and the maximum torque (M_{L,} M_{H}) were determined. From these, the difference Δ (Δ(M_{H}-M_{L}) was calculated (maximum torque minus minimum torque). Furthermore, the time periods were determined in which the torque, starting from the time of the minimum torque M_{L}, reaches 10%, 50% and 90% of the maximum torque M_{H}, respectively. The time periods were designated as T₁₀, T₅₀ and T₉₀.

### 11. Determination of elongation under tension

The elongation under tension, including tensile strength and elongation at failure, was determined on the vulcanized rubber compositions according to ISO 37:2011.

### 12. Dynamic-mechanical thermal analysis (DMTA), or dynamic-mechanical analysis (DMA)

DMTA/DMA serves to characterize the viscoelastic behavior. A rubber-based component has both elastic and viscous qualities. This behavior is typically characterized by tangent delta, abbreviated as tan δ. Tangent delta is the ratio of the loss modulus to the storage modulus, whereby the storage modulus measures the stored energy representing the elastic portion and the loss modulus corresponds to the proportion of energy that is lost through conversion into heat by internal friction. Testing was carried out according to the standard ISO 4664-3:2021. The viscoelastic behavior was analyzed by means of the testing apparatus Netzsch EPLEXOR 2000 In the time sweep process, a vulcanized rubber composition was subjected to a sinusoidal oscillating stress in the range of linear-elastic deformation. The test was performed at the following parameters:
static load (force): 50 N
dynamic load (force): 25 N
contact force: 0,30 N
temperature: 60°C;
soak time: 300 s;
frequency: 10 Hz;
undermeasurement load: pre- & dynamic
sample shape: cylinder with 16.15 mm.

These testing conditions have been used to predict the potential for the rolling resistance reduction of a tire.

Generally, the complex or dynamic modulus (G*) is defined as: $G * = G ′ + i \times G "$ with
- G':: storage modulus (real component, represents the elastic component)
- G":: loss modulus (imaginary component; represents the viscous component)
- i:: imaginary number

The loss factor tan δ (tan delta) is defined as: $tan δ = G " / G ′ .$

### 13. Determination of Klason-lignin content

The content of Klason-lignin is determined according to Tappi T 222 om-02 (https://www.tappi.org/content/SARG/T222.pdf). The content of Klason-lignin is determined after treatment of the lignin-containing biomass in 72% H₂SO₄. The method comprises the following steps: the lignin-containing biomass is extracted using benzene and ethanol and then 72% concentrated sulfuric acid is added and the resulting mixture is heated at 30 °C for 4 h. Dilution with water is then performed such that the content of sulfuric acid is 3% and the resulting mixture is then heated for 2 h at reflux temperature. The insoluble material present in the mixture is filtered off and is weighed as Klason-lignin as described by A. Sluiter et al. (2008) in "Determination of Structural Carbohydrates and Lignin in Biomass", NREL Technical Report NREL/TP-510-42618.

### Examples and comparative examples

The following examples and comparative examples serve to explain the invention, but should not be interpreted restrictively.

### 1. Production of organic fillers employed according to the invention

**1.1** As the first organic filler according to the invention, a lignin **L1** obtainable by hydrothermal treatment was used.

The lignin **L1** obtainable by hydrothermal treatment was produced according to the process for producing lignins that are obtainable by hydrothermal treatment, described in WO 2017/085278 A1, whereby reaction with formaldehyde was carried out prior to the hydrothermal treatment as described in WO 2021/005230 A1 and thermal treatment was carried out after the hydrothermal treatment as described in WO 2022/043470 A1.

For this purpose, a liquid containing lignin was provided. First, water and lignin were mixed, thus preparing a lignin-containing liquid with a dry matter content of 9.7 wt.-%. Subsequently, the lignin was largely dissolved in the lignin-containing liquid. For this purpose, the pH value was adjusted by adding NaOH. The preparation of the solution was promoted by intense mixing at 80 °C for 3 h. The lignin-containing liquid was then modified using formaldehyde. The lignin-containing liquid was subsequently subjected to a hydrothermal treatment, thus obtaining a solid matter. In the process, the solution prepared was heated to the reaction temperature of 240 °C with 1.5 K/min, which was then held over the reaction period of 2 h. Subsequently, cooling was performed. As a result, an aqueous suspension of solid matter was obtained. By filtration and washing, the solid matter was largely dewatered and washed. Subsequent drying and thermal treatment was carried out under nitrogen in a fluidized bed, wherein for drying the temperature was brought to 50 °C at 1.5 K/min and held for 2.5 h, and subsequently for thermal treatment the temperature was brought to 190 °C at 1.5 K/min and held for a period of 15 min and then cooled down again. The dried solid matter was grinded on a jet mill with nitrogen as jet gas to a d99 value <10 µm (determined according to the determination method described hereinabove). The obtained product was softly granulated using a roller compaction (cantilevered). The granulation was carried out in a way that **L1** has a sieve residue of 1315 ppm (45 µm).

**1.2** As a second organic filler according to the invention, a lignin **L2** obtainable by hydrothermal treatment was used. The lignin **L2** obtainable by hydrothermal treatment was produced according to the process for producing lignins that are obtainable by hydrothermal treatment described in WO 2017/085278 A1, whereby reaction with formaldehyde was carried out prior to the hydrothermal treatment as described in WO 2021/005230 A1 and thermal treatment was carried out after the hydrothermal treatment as described in WO 2022/043470 A1.

For this purpose, a liquid containing lignin was provided. First, water and lignin were mixed, thus preparing a lignin-containing liquid with a dry matter content of 15.8 wt.-%. Subsequently, the lignin was largely dissolved in the lignin-containing liquid. For this purpose, the pH value was adjusted by adding NaOH. The preparation of the solution was promoted by intense mixing at 80 °C for 3 h. The lignin-containing liquid was then modified using formaldehyde at 80°C for 1 h. The lignin-containing liquid was subsequently subjected to a hydrothermal treatment. In the hydrothermal treatment, the solution prepared was heated to the reaction temperature of 230 °C with 1.5 K/min, which was then held over the reaction period of 2 h. Subsequently, cooling was performed. As a result, an aqueous suspension of solid matter was obtained. By filtration and washing, the solid matter was largely dewatered and washed. Subsequent drying and thermal treatment was carried out under nitrogen in an oven, wherein for drying the temperature was brought to 105 °C at 0.5 K/min and held for 12 h, and subsequently for thermal treatment the temperature was brought to 190 °C at 0.3 K/min and held for a period of 60 min and then cooled down again. During heating, drying, thermal treatment and cooling the system was flushed with nitrogen, and the oxygen content was kept below 1.5%. The dried solid matter obtained was grinded on a jet mill with nitrogen as jet gas to a d99 value <10 µm (determined according to the determination method described hereinabove). The obtained product was softly granulated using a roller compaction (cantilevered). The granulation was carried out in a way that **L2** has a sieve residue of 316 ppm (45 µm).

**1.3** The lignins **L1** and **L2** obtainable by hydrothermal treatment were characterized as specified in the following Table 1.1 by means of the methods mentioned hereinabove.

**Table 1.1 - Properties of the lignins L1 and L2 obtainable by hydrothermal treatment**

| *Test* | *Unit* | *Lignin* **L1** | *Lignin* **L2** |
|---|---|---|---|
| STSA | m²/g | 72.0 | 43.1 |
| BET | m²/g | 77.2 | 45.3 |
| Carbon content | % by weight | n.d. | 69.0 |
| Ash content | % by weight | 2.4 | 1.4 |
| pH value | ./. | 7.5 | 8.5 |
| Dry substance content | % by weight | 98.5 | 98.9 |
| d99 | µm | 7.14 | 5.87 |
| d90 | µm | 5.0 | 3.78 |
| d25 | µm | 1.35 | n.d. |

| | | | |
|---|---|---|---|
| n.d. = not determined | | | |

### 2. Production of vulcanizable rubber compositions

Vulcanizable rubber compositions were prepared by means of a two-stage process.

In the first stage, a rubber composition as a base mixture (masterbatch) was prepared by compounding the constituents of the rubber composition according to the invention, comprising the rubber composition K, and the filler component F. In the second stage, the constituents of the cross-linking system (vulcanization system VS) were admixed.

The vulcanizable rubber compositions with the organic fillers **L1** or **L2** employed according to the invention, the vulcanizable rubber compositions with the organic filler **L1** or **L2** and industrial carbon black as second filler employed according to the invention, as well as the corresponding comparative rubber compositions with industrial carbon black as the sole filler, were prepared as follows:

### Stage 1

The natural rubber (NR) SVR CV 60 from the trading firm Weber & Schaer was used as the rubber.

When using industrial carbon black as the sole filler (comparative rubber composition **VK1V1),** it was added as a batch of 33.3% after 2:00 minutes (together with the additives used, such as zinc oxide, stearic acid and other additives; cf. the following Table 2.2), and as another batch of 33.3% after 3:00 minutes (together with 50% of the process oil used). After 5 minutes, the last batch of 33.3% of the industrial carbon black was added together with the remaining 50% of the process oil used.

When the filler employed according to the invention was employed as the sole filler (rubber compositions according to the invention, **VK1B3, VK1B4, VK1B5** and **VK1B6),** it was added as a batch of 33.3% after 2:00 minutes (together with the additives used), and as another batch of 33.3% after 3:00 minutes (together with 50% of the process oil used). After 5 minutes, the last batch of 33,3% of the filler employed according to the invention is added together with another 50% of the process oil used.

In case of the partial replacement of industrial carbon black by the filler employed according to the invention (rubber composition **VK1B1** and rubber composition **VK1B2),** 100% of the industrial carbon black used are added together with the additives used after 2:30 minutes. After 3:30 minutes, 50% of the filler employed according to the invention is added (together with 50% of the process oil used), and another 50% after 5:30 minutes (together with another 50% of the process oil used).

For all compositions, the constituents of the mixture were mixed dispersively and distributively until the mixing process was stopped after 10 min and the rubber compositions were taken from the laboratory mixer. Under these mixing conditions, the rubber composition achieved a final temperature of 130 °C to 140°C in each case. After the preparation of the rubber composition was completed, it was cooled down before carrying out the second stage (relaxation/storage).

By means of the stage 1 described hereinabove, six rubber compositions according to the invention were obtained, which contained a natural rubber as the rubber component K and lignin **L1 (K1B1** and **K1B4)** obtainable by hydrothermal treatment, or lignin **L2 (K1B2, K1B3, K1B5** and **K1B6)** obtainable by hydrothermal treatment as the organic filler of the filler component, whereby in the case of **K1B1** and **K1B2** the rubber composition according to the invention contained also carbon black as second filler component.

In addition, the comparative composition **K1V1** was obtained, which also contained a natural rubber as the rubber component K, but no lignin **L1** or **L2,** but commercially available carbon black exclusively as the organic filler of the filler component.

The exact compositions of the vulcanizable rubber compositions can be seen from the following Table 2.1. The quantities are respectively given in phr (parts per hundred parts of rubber by weight).

### Stage 2

In the second stage, one **(K1V1)** or two **(K1B1, K1B2, K1B3** and **K1B4** as well as **K1B5)** or three **(K1B6)** accelerators were incorporated into the rubber composition of the first stage, thus obtaining a vulcanizable rubber composition. A sulfur cross-linking agent and one or more sulfur accelerator systems as co-agents were added into the laboratory mixer and mixed together with the rubber composition from the first stage at a speed of 50 rpm for 5 minutes. Here, the final temperature was 90 °C to 100 °C. After the cross-linking system was admixed, the resulting composition was cooled.

By means of the stage 2 described hereinabove, after addition of the vulcanization system VS consisting of cross-linker and accelerators, six vulcanizable rubber composition according to the invention were obtained **(VK1B1, VK1B2, VK1B3, VK1B4, VK1B5** and **VK1B6),** which can be vulcanized after completion of the performance of stage 2. In addition, a vulcanizable comparative rubber composition was obtained in this way **(VK1V1),** which can also be vulcanized after completion of the performance of stage 2. The exact compositions of the vulcanizable rubber compositions can be seen from the following Tables 2.1 and 2.2.

As the industrial carbon black, the commercially available product Carbon black N550 from the company Lehmann & Voss & Co. (distributor for Carbon Black) was employed.

As the process oil, a naphthenic plasticizing agent (VIVATEC 500) from the company Hansen & Rosenthal was used. As the antiaging agent, N-isopropyl-N'-phenyl-p-phenylendiamine (IPPD) from the company Lehmann & Voss & Co., with the tradename LUVOMAXX IPPD, was used, and as the light stabilizing wax NEGOZONE 3457 F from the company Hansen & Rosenthal was used. As cross-linking agent (sulfur) Struktol^{®} SU95 from the company Schill + Seilacher was used. As cross-linking agent (sulfur donor) Avorator DTDM 80 GE was used, which is a polymer-bound sulfur donor based on 4,4'-dithiodimorpholine from the company Avokal^{®}. As the accelerators, the products Rhenogran^{®} TBBS-80 (B1) from the company Rhein Chemie, Rhenogran^{®} TBzTD-70 (B2) from the company Rhein Chemie, and Avorator^{®} TMTD-80 (B3) from the company Avokal^{®} were used. As zinc oxide, the product Weißsiegel from the company Brüggemann was used. As the stearic acid, the product Palmera B 1805 from the company Avokal^{®} was used.

**Table 2.1 - Vulcanizable rubber composition as comparative example VK1V1**

| *Constituents* | ***VK1V1*** |
|---|---|
| Natural rubber | 100 |
| Industrial carbon black | 50 |
| Process oil | 2 |
| Zinc oxide | 5 |
| Stearic acid | 2 |
| Antiaging agent | 1.5 |
| Light stabilizing wax | 1 |
| | |
| Cross-linking agent | 1.7 |
| Accelerator B1 | 1.5 |

**Table 2.2 - Vulcanizable rubber compositions according to the invention VK1B1, VK1B2, VK1B3, VK1B4, VK1B5 and VK1B6**

| *Constituents* | ***VK1B1*** | ***VK1B2*** | ***VK1B3*** | ***VK1B4*** | ***VK1B5*** | ***VK1B6*** |
|---|---|---|---|---|---|---|
| Natural rubber | 100 | 100 | 100 | 100 | 100 | 100 |
| Industrial carbon black | 30 | 30 | - | - | - | - |
| Organic filler **L1** | - | 20 | - | 50 | - | - |
| Organic filler **L2** | 20 | - | 50 | - | 50 | 50 |
| Process oil | 2 | 2 | 2 | 2 | 2 | 2 |
| Zinc oxide | 5 | 5 | 5 | 5 | 5 | 5 |
| Stearic acid | 2 | 2 | 2 | 2 | 2 | 2 |
| Antiaging agent | 1.5 | 1.5 | 1.5 | 1.5 | 1.5 | 1.5 |
| Light stabilizing wax | 1 | 1 | 1 | 1 | 1 | 1 |
| | | | | | | |
| Sulfur | 1.7 | 1.7 | 1.7 | 1.7 | 2.0 | - |
| Sulfur donor | - | - | - | - | - | 1.9 |
| Accelerator B1 | 1.5 | 1.5 | 1.5 | 1.5 | 1.8 | 1.8 |
| Accelerator B2 | 0.3 | 0.3 | 0.6 | 0.6 | 0.6 | 0.3 |
| Accelerator B3 | - | - | - | - | - | 1.3 |

### 3. Examinations and tests of the vulcanizable rubber compositions and the vulcanized compositions obtainable therefrom

### 3.1 Cross-linking density and reaction kinetics

The rubber compositions obtained after stage 2 were examined with regards to the properties of their raw mixtures. In the process, the reaction kinetics and the cross-linking density were measured according to the methods described hereinabove.

Table 3.1 summarizes the results obtained with regard to minimum and maximum torque (M_{L}, M_{H}), difference Δ (M_{H}-M_{L}) and the time periods T₁₀, T₅₀ and T₉₀ for the comparative example **VK1V1.** The values were determined at a deflection of 0.5 °.

**Table 3.1**

| *Parameters* | ***VK1V1*** |
|---|---|
| T₁₀ [min] | 2.04 |
| T₅₀ [min] | 2.86 |
| T₉₀ [min] | 4.50 |
| M_{L} [dNm] | 1.33 |
| M_{H} [dNm] | 15.67 |
| Δ (M_{H}-M_{L}) [dNm] | 14.34 |

Table 3.2 summarizes the results obtained with regard to minimum and maximum torque (M_{L}, M_{H}), difference Δ (M_{H}-M_{L}) and the time periods T₁₀, T₅₀ and T₉₀ for the vulcanized rubber compositions **VK1B1, VK1B2, VK1B3, VK1B4, VK1B5** and **VK1B6** according to the invention. The values were determined at a deflection of 0.5 °.

**Table 3.2**

| *Parameters* | ***VK1B1*** | ***VK1B2*** | ***VK1B3*** | ***VK1B4*** | ***VK1B5*** | ***VK1B6*** |
|---|---|---|---|---|---|---|
| T₁₀ [min] | 2.69 | 2.77 | 4.16 | 3.84 | 4.25 | 2.51 |
| T₅₀ [min] | 3.22 | 3.34 | 4.73 | 4.52 | 4.80 | 4.37 |
| T₉₀ [min] | 4.59 | 4.77 | 6.31 | 5.91 | 6.31 | 7.49 |
| M_{L} [dNm] | 1.67 | 2.45 | 2.19 | 4.69 | 2.02 | 2.04 |
| M_{H} [dNm] | 14.84 | 14.64 | 13.65 | 14.81 | 15.16 | 15.60 |
| Δ (M_{H}-M_{L}) [dNm] | 13.17 | 12.19 | 11.46 | 10.12 | 13.14 | 13.56 |

The rubber compositions according to the invention **VK1B1** and **VK1B2,** characterized by partial replacement of carbon black with lignin-based filler **L1** or **L2,** showed an increased incubation time (better scorch time), which leads to a longer T₉₀ value as compared to the case of the comparative example **VK1V1.** Surprisingly, the rubber compositions according to the invention **VK1B3, VK1B4 VK1B5** and **VK1B6,** characterized by complete replacement of carbon black with lignin-based filler **L1** or **L2,** showed an even more increased incubation time (better scorch time), which leads to a significantly longer T₉₀ value as compared to the case of the comparative example **VK1V1.**

### 3.2 Tensile strength, elongation at failure and Shore A hardness

The rubber composition **K1V1** obtained was vulcanized at 160 °C, with the vulcanization time adapted to the reaction kinetics of the respective mixture. The vulcanization time for mixture **VK1V1** was 7 min. Subsequently, tensile strength, elongation at failure, and Shore A hardness were determined according to the methods described hereinabove.

Table 3.3 summarizes the results obtained for the comparative example **VK1V1.**

**Table 3.3**

| *Parameters* | ***VK1V1*** |
|---|---|
| Tensile strength [MPa] | 25.8 |
| Elongation at failure [%] | 534 |
| Shore A | 64 |

The obtained rubber compositions **K1B1, K1B2, K1B3, K1B4, K1B5** and **K1B6** were vulcanized at 160 °C, wherein the vulcanization times were adapted to the data of the reaction kinetics of the respective mixture. The vulcanization time for the mixture **VK1B1** was 7 min, for the mixture **VK1B2** 7 min, for the mixture **VK1B3** 9 min, for the mixture **VK1B4** 11 min, for the mixture **VK1B5** 9 min and for the mixture **VK1B6** 10 min. Subsequently, tensile strength, elongation at failure, and Shore A hardness were determined according to the methods described hereinabove.

Table 3.4 summarizes the results obtained for vulcanized rubber compositions **VK1B1, VK1B2, VK1B3, VK1B4, VK1B5** and **VK1B6** according to the invention.

**Table 3.4**

| *Parameters* | ***VK1B1*** | ***VK1B2*** | ***VK1B3*** | ***VK1B4*** | ***VK1B5*** | ***VK1B6*** |
|---|---|---|---|---|---|---|
| Tensile strength [MPa] | 23.6 | 23.9 | 22.1 | 21.7 | 21.4 | 21.6 |
| Elongation at failure [%] | 557 | 580 | 618 | 597 | 584 | 541 |
| Shore A | 64 | 65 | 62 | 67 | 64 | 65 |

As compared to the comparative rubber composition **VK1V1,** the rubber composition according to the invention **VK1B1, VK1B2, VK1B3, VK1B4** and **VK1B5** as well as **VK1B6** show a decreasing tensile strength in the case of a partial replacement of carbon black with lignin-based fillers **L1** or **L2 (VK1B1** and **VK1B2)** and an even more decreasing tensile strength in the case of complete replacement of carbon black with lignin-based fillers **L1 or L2 (VK1B3, VK1B4, VK1B5** and **VK1B6),** whereas the hardness (Shore A) remains unchanged or increases.

### 3.3 Dynamic-mechanical thermal analysis (DMTA)

The vulcanized rubber compositions were analyzed by means of a dynamic-mechanical thermal analysis (DMTA) according to the method described hereinabove in order to characterize its viscoelastic behavior. For a vulcanized rubber composition, it is basically desirable to achieve a highest possible dynamic stiffness and a lowest possible tan delta value. One key figure for the dynamic stiffness is the complex modulus G*. Usually, a high dynamic stiffness G* (60 °C) leads to an increased loss factor tan delta. However, low heat generation and thus low tan delta values are preferred.

Table 3.5 summarizes the results obtained for the comparative example **VK1V1.**

**Table 3.5**

| *Parameters* | ***VK1V1*** |
|---|---|
| Storage modulus G' at 60°C [MPa] | 8.40 |
| Complex modulus G* at 60 °C [MPa] | 8.45 |
| Loss factor tan delta at 60 °C | 0.11 |

Table 3.6 summarizes the results obtained for vulcanized rubber compositions **VK1B1, VK1B2, VK1B3, VK1B4, VK1B5** and **VK1B6** according to the invention.

**Table 3.6**

| *Parameters* | ***VK1B1*** | ***VK1B2*** | ***VK1B3*** | ***VK1B4*** | ***VK1B5*** | ***VK1B6*** |
|---|---|---|---|---|---|---|
| Storage modulus G' at 60°C [MPa] | 9.69 | 10.85 | 9.09 | 14.15 | 11.03 | 11.72 |
| Complex modulus G* at 60 °C [MPa] | 9.73 | 10.91 | 9.12 | 14.24 | 11.06 | 11.76 |
| Loss factor tan delta at 60 °C | 0.10 | 0.11 | 0.08 | 0.11 | 0.07 | 0.08 |

The dynamic stiffness of the vulcanized rubber compositions according to the invention **VK1B1, VK1B2, VK1B3, VK1B4, VK1B5** and **VK1B6,** described by the complex modulus, is surprisingly higher than in the case of the comparative example **VK1V1** with industrial carbon black as the sole filler. At the same time, the rubber compositions **VK1B1, VK1B2, VK1B3, VK1B4, VK1B5** and **VK1B6** vulcanized according to the invention surprisingly show comparable or significantly lower loss factors tan delta than in the case of the comparative example **VK1V1** with industrial carbon black as the sole filler.

The rubber compositions with lignin **L2** as the sole filler, **VK1B3, VK1B5** and **VK1B6** show a particularly pronounced improvement of these parameters over the rubber composition **VK1V1** with carbon black as the sole filler. The high dynamic stiffness in combination with the low loss factor as an indicator for the hysteresis, the conversion of mechanical energy into heat, is unique to these lignin-based fillers. This reduction of heat formation reduces the rolling resistance of the tire, with positive effects to fuel consumption and CO₂ emissions of the vehicle. By better decoupling these two rubber-technical key values, as compared to rubber compositions that contain industrial carbon black, the lignin-based compositions disclosed herein are very well suited for employment in rubber articles that are used under dynamic deformation, e.g., for the use in compounds for tire carcasses, in order to improve the rolling resistance of tires, or in technical rubber articles.

## Claims

1. A vulcanizable rubber composition comprising
a vulcanization system VS comprising in turn at least sulfur and/or at least one sulfur donor,
at least one rubber that is cross-linkable by means of sulfur and/or sulfur donor, with the proviso that if at least one halobutyl rubber is present, it is present in the rubber composition in an amount <70 phr, and
at least one organic filler as a first filler F1, which is obtainable from lignin-containing biomass having a content of Klason-lignin of at least 60 wt.-%, based on its dry matter content, wherein organic filler F1
is different from carbon black,
has a ¹⁴C content, determined according to the method described in the specification, in a range from 0.20 to 0.45 Bq/g of carbon,
has a BET surface area, determined according to the method described in the specification, in a range from >24.0 to 150 m²/g, and
is present in the rubber composition in an amount in a range of from 1 to <140 phr,
wherein an amount of any optionally present carbon black in the rubber composition as at least one second filler F2 is <40 phr,
wherein an amount of any optionally present organosilane, which has at least one hydrolysable group and at least one sulfur atom, in the rubber composition is <7 phr,
except of vulcanizable rubber compositions VK1V2, VK1B1, VK2B1, VK2B2, VK2B3, VK2B4 und VK2B5 disclosed in the experimental part of PCT/EP2022/076858,
except of vulcanizable rubber composition VKV3 disclosed in the experimental part of PCT/EP2022/073490 (published as WO 2023/025808 A1), and
except of vulcanizable rubber compositions KV1VS, KI1VS, KI2VS and KI3VS disclosed in the experimental part of PCT/EP2022/073490 (published as WO 2022/243486 A1).

2. The rubber composition according to claim 1, **characterized in that** the organic filler F1 has an STSA surface area, determined according to the method described in the specification, that differs from its BET surface area by at most 20%, preferably by at most 15%, more preferably by at most 10%, even more preferably by at most 7.5%, still more preferably by at most 6.5 or 5.0%.

3. The rubber composition according to claim 1 or 2, **characterized in that** the amount of any optionally present carbon black in the rubber composition as at least one second filler F2 is in a range of from 0 to <39 phr, preferably of from 0 to 35 phr, more preferably of from 0 to 30 or 0 to <30 phr, even more preferably of from 0 to ≤29 phr, still more preferably of from 0 to 25 phr, even more preferably of from 0 to 20 or to 15 phr, still more preferably of from 0 to 10 or to 5 phr, yet more preferably **in that** the rubber composition does not or essentially does not contain any carbon black as second filler F2.

4. The rubber composition according to any of the preceding claims, **characterized in that** the relative weight ratio of organic filler(s) F1 to any carbon black as filler(s) F2, if present, is in a range of from to 49:1 to 1:2, preferably of from 40:1 to 1:1.75, more preferably of from 30:1 to 1:1.50, even more preferably of from 25:1 to 1:1.25, still more preferably of from 20:1 to 1:1, yet more preferably of from 15:1 to >1:1, or **in that** the rubber composition is free or essentially free of any carbon black as filler(s) F2.

5. The rubber composition according to any one or more of the preceding claims, **characterized in that** the amount of any optionally present organosilane, which has at least one hydrolysable group and at least one sulfur atom, in the rubber composition is <5 phr, preferably **in that** the rubber composition does not or essentially does not contain any organosilane, which has at least one hydrolysable group and at least one sulfur atom, more preferably **in that** the rubber composition does not or essentially does not contain any kind of organosilane.

6. The rubber composition according to any one or more of the preceding claims, **characterized in that** it contains the at least one organic filler F1 in an amount in a range of from 1 to 139 or to 138 phr, preferably of from 5 to 130 or to 115 phr, particularly preferably of from 10 to 100 or to 80 phr, more particularly preferably of from 15 to 70 phr, most preferably of from 15 to 60 phr or of from 20 to 55 phr.

7. The rubber composition according to any one or more of the preceding claims, **characterized in that** the organic filler F1 is a particulate carbon material obtainable from lignin-containing biomass, preferably from lignin-containing phyto-mass, wherein the lignin-containing biomass preferably has a content of Klason-lignin, based on its dry matter content, of at least 65% by weight, more preferably at least 70% by weight, even more preferably at least 75% by weight, particularly preferably at least 80% by weight, especially at least 85% by weight.

8. The rubber composition according to any one or more of the preceding claims, **characterized in that** the organic filler F1 is a lignin-based filler, wherein preferably the organic filler F1 is present in a form that is obtainable by means of hydrothermal treatment of the lignin-containing biomass, wherein the hydrothermal treatment preferably has been carried out at a temperature in a range from >100 °C to <300 °C, particularly preferably from >150 °C to <250 °C.

9. The rubber composition according to any one or more of the preceding claims, **characterized in that** the organic filler F1 has
an STSA surface area, determined according to the method described in the specification, in a range from >20 or >22 or >23 or 24 to < 150 m²/g, preferably from 20 or >22 or >23 or 24 to 130 m²/g, particularly preferably from 25 to 120 m²/g, more particularly preferably from 30 to 110 m²/g, in particular from 40 to 100 m²/g, most preferably from 40 to < 100 m²/g, and/or
a BET surface area in a range from 25 to 120 m²/g, particularly preferably in a range from 30 to 110 m²/g, most preferably in a range from 40 to 100 m²/g, and/or
a d99 value of <25 µm, preferably <20 µm, particularly preferably <18 µm, more particularly preferably <15 µm, still more preferably <12 µm, even more preferably <10 µm, even more preferably <9 µm, even more preferably <8 µm, wherein the d99 value is determined by means of laser diffraction according to ISO 13320:2009, respectively.

10. The rubber composition according to any one or more of the preceding claims, **characterized in that** the organic filler F1 has
an oxygen content in a range from >8% by weight to <30% by weight, preferably from >10% by weight to <30% by weight, particularly preferably from >15% by weight to <30% by weight, most preferably from >20% by weight to <30% by weight, relative to the ash-free and water-free filler, and/or
a carbon content in a range from >60% by weight to <90% by weight, preferably from >60% by weight to <85% by weight, particularly preferably from >60% by weight to <82% by weight, most preferably from >60% by weight to <80% by weight, relative to the ash-free and water-free filler, respectively.

11. The rubber composition according to any one or more of the preceding claims, **characterized in that**
the at least one rubber that is cross-linkable by means of sulfur is a diene rubber, preferably a diene rubber selected from the group consisting of natural rubber (NR), synthetical natural rubber, in particular isoprene rubber (IR), ethylene propylene diene monomer rubber (EPDM), styrene butadiene rubber (SBR), solution-polymerized styrene butadiene rubber (SSBR), emulsion-polymerized styrene butadiene rubber (ESBR), in particular functionalized SSBR, butadiene rubber (BR), chloroprene rubber (CR), acrylonitrile butadiene rubber (NBR; nitrile rubber), isobutylene isoprene rubber (IIR), brominated isobutylene isoprene rubber (BIIR), chlorinated isobutylene isoprene rubber (CIIR), and mixtures thereof, and preferably is selected from natural rubber, styrene butadiene rubber or solution-polymerized styrene butadiene rubber and mixtures thereof, and/or **in that**
sulfur and/or the at least one sulfur donor is contained in the rubber composition in a quantity that lies in a range from 0.25 to 10 phr, preferably 0.25 to 7 phr, particularly preferably 0.5 to 5 phr, most preferably 1 to 3 phr.

12. A kit of parts, comprising, in spatially separated form,
as part A), a rubber composition as defined in any one or more of the preceding claims, wherein part A) does however not comprise sulfur and/or at least one sulfur donor of the vulcanization system VS as defined in one or more of the preceding claims, and
as part B), a vulcanization system VS as defined in claim 1 or 11, comprising at least sulfur and/or at least one sulfur donor.

13. A vulcanized rubber composition, which is obtainable by vulcanization of the vulcanizable rubber composition according to any one or more of claims 1 to 11, or by vulcanization of a vulcanizable rubber composition obtainable by combining and mixing both parts A) and B) of the kit of parts according to claim 12.

14. A use of the vulcanizable rubber composition according to any one or more of claims 1 to 11, of the kit of parts according to claim 12 or of the vulcanized rubber composition according to claim 13,
for employment in the production of tires, preferably in the production of pneumatic tires and solid tires, of tire components, preferably selected from base components, i.e., components under the tread, shoulder strips (wings), cap-plies, belts, beads and/or bead reinforcements, and/or for employment in the production of preferably technical rubber articles that preferably are selected from drive belts, straps/belts, molded parts such as buffers/cushions, bearings/mounts, in particular hydromounts, conveyor belts, profiles, seals, rings and/or hoses.

15. A tire, preferably a pneumatic tire or a solid tire, a tire component or a preferably technical rubber article, respectively produced by employing the vulcanizable rubber composition according to any one or more of claims 1 to 11, the kit of parts according to claim 12 or the vulcanized rubber composition according to claim 13, wherein preferably in the case of tire components, these are selected from base components, i.e., components under the tread, shoulder strips (wings), cap-plies, belts, beads and/or bead reinforcements, and wherein, preferably in the case of rubber articles such as preferably technical rubber articles, these preferably are selected from drive belts, straps/belts, molded parts such as buffers/cushions, bearings/mounts, in particular hydromounts, conveyor belts, profiles, seals, rings and/or hoses.

16. A use of the organic filler F1 as defined in any one or more of the preceding claims for increasing the dynamic stiffness, in particular complex modulus G*, lowering the tan delta value, or both, of vulcanized rubber compositions being obtainable from vulcanizable rubber compositions containing the organic filler F1, preferably being obtainable from vulcanizable rubber compositions according to any one or more of claims 1 to 11.

## Patentansprüche

1. Vulkanisierbare Kautschukzusammensetzung umfassend
ein Vulkanisations-System, das seinerseits zumindest Schwefel und/oder zumindest einen Schwefel-Donor umfasst,
zumindest einen Kautschuk, der mittels Schwefel und/oder eines Schwefel-Donors vernetzbar ist, mit der Maßgabe, dass, wenn zumindest ein Halobutyl-Kautschuk vorhanden ist, dieser in der Kautschukzusammensetzung in einer Menge von < 70 phr vorhanden ist, und
zumindest einen organischen Füllstoff als einen ersten Füllstoff F1, der aus Lignin enthaltender Biomasse mit einem Gehalt an Klason-Lignin von zumindest 60 Gew.-% bezogen auf den Trockenmassegehalt erhalten werden kann, wobei der organische Füllstoff F1
sich von Kohlenstoffruß unterscheidet,
einen ¹⁴C-Gehalt in dem Bereich von 0,20 bis 0,45 Bq/g Kohlenstoff aufweist, bestimmt gemäß dem in der Beschreibung dargelegten Verfahren,
einen BET-Oberflächenbereich in einem Bereich von > 24,0 bis 150 m²/g aufweist, bestimmt gemäß dem in der Beschreibung dargelegten Verfahren, und
in der Kautschukzusammensetzung in einer Menge in einem Bereich von 1 bis < 140 phr vorhanden ist,
wobei eine Menge an einem beliebigen optional vorhandenen Kohlenstoffruß in der Kautschukzusammensetzung als zumindest ein zweiter Füllstoff F2 < 40 phr beträgt,
wobei eine Menge an einem beliebigen optional vorhandenen Organosilan, das zumindest eine hydrolysierbare Gruppe und zumindest ein Schwefelatom aufweist, in der Kautschukzusammensetzung < 7 phr beträgt,
mit Ausnahme der vulkanisierbaren Kautschukzusammensetzungen VK1V2, VK1B1, VK2B1, VK2B2, VK2B3, VK2B4 und VK2B5, die in dem experimentellen Teil der PCT/EP2022/076858 offenbart sind,
mit Ausnahme der vulkanisierbaren Kautschukzusammensetzung VKV3, die in dem experimentellen Teil der PCT/EP2022/073490 (als WO 2023/025808 A1 veröffentlicht) offenbart ist, und
mit Ausnahme der vulkanisierbaren Kautschukzusammensetzungen KV1VS, KI1VS, KI2VS und KI3VS, die in dem experimentellen Teil der PCT/EP2022/073490 (als WO 2022/243486 A1 veröffentlicht) offenbart sind.

2. Kautschukzusammensetzung nach Anspruch 1, **dadurch gekennzeichnet, dass** der organische Füllstoff F1 einen STSA-Oberflächenbereich, bestimmt gemäß dem in der Beschreibung dargelegten Verfahren, aufweist, der sich von seinem BET-Oberflächenbereich um höchstens 20 %, vorzugsweise um höchstens 15 %, noch bevorzugter um höchstens 10 %, sogar noch bevorzugter um höchstens 7,5 %, und sogar noch bevorzugter um höchstens 6,5 oder 5,0 % unterscheidet.

3. Kautschukzusammensetzung nach Anspruch 1 oder 2, **dadurch gekennzeichnet, dass** die Menge an einem beliebigen optional vorhandenen Kohlenstoffruß in der Kautschukzusammensetzung als zumindest ein zweiter Füllstoff F2 in einem Bereich von 0 bis < 39 phr, vorzugsweise von 0 bis 35 phr, noch bevorzugter von 0 bis 30 oder 0 bis < 30 phr, sogar noch bevorzugter von 0 bis < 29 phr, ferner noch bevorzugter von 0 bis 25 phr, sogar noch bevorzugter von 0 bis 20 oder bis 15 phr, ferner noch bevorzugter von 0 bis 10 oder bis 5 phr liegt, und sogar noch bevorzugter, dass die Kautschukzusammensetzung keinen oder im Wesentlichen keinen Kohlenstoffruß als zweiten Füllstoff F2 enthält.

4. Kautschukzusammensetzung nach einem der vorhergehenden Ansprüche, **dadurch gekennzeichnet, dass** das relative Gewichtsverhältnis von organischem/n Füllstoff(en) F1 zu einem beliebigen Kohlenstoffruß als Füllstoff(e) F2, sofern vorhanden, in einem Bereich von 49:1 bis 1:2, vorzugsweise von 40:1 bis 1:1,75, noch bevorzugter von 30:1 bis 1:1,50, sogar noch bevorzugter von 25:1 bis 1:1,25, ferner noch bevorzugter von 20:1 bis 1:1, sogar noch bevorzugter von 15:1 bis > 1:1 beträgt, oder dass die Kautschukzusammensetzung frei oder im Wesentlichen frei von jeglichem Kohlenstoffruß als Füllstoff(e) F2 ist.

5. Kautschukzusammensetzung nach einem oder mehreren der vorhergehenden Ansprüche, **dadurch gekennzeichnet, dass** die Menge an einem beliebigen optional vorliegenden Organosilan, das zumindest eine hydrolysierbare Gruppe und zumindest ein Schwefelatom aufweist, in der Kautschukzusammensetzung < 5 phr ist, dass vorzugsweise die Kautschukzusammensetzung kein oder im Wesentlichen kein Organosilan enthält, das zumindest eine hydrolysierbare Gruppe und zumindest ein Schwefelatom aufweist, und dass die Kautschukzusammensetzung noch bevorzugter keinerlei oder im Wesentlichen keinerlei Art von Organosilan enthält.

6. Kautschukzusammensetzung nach einem oder mehreren der vorhergehenden Ansprüche, **dadurch gekennzeichnet, dass** sie den zumindest einen organischen Füllstoff F1 in einer Menge in einem Bereich von 1 bis 139 oder bis 138 phr, vorzugsweise von 5 bis 130 oder bis 115 phr, besonders bevorzugt von 10 bis 100 oder bis 80 phr, noch bevorzugter von 15 bis 70 phr, am meisten bevorzugt von 15 bis 60 phr oder von 20 bis 55 phr enthält.

7. Kautschukzusammensetzung nach einem oder mehreren der vorhergehenden Ansprüche, **dadurch gekennzeichnet, dass** der organische Füllstoff F1 ein partikelförmiges Kohlenstoffmaterial ist, das aus Lignin enthaltender Biomasse, vorzugsweise aus Lignin enthaltender Phytomasse, erhalten werden kann, wobei die Lignin enthaltende Biomasse vorzugsweise einen Gehalt an Klason-Lignin, bezogen auf ihren Trockenmassegehalt, von mindestens 65 Gew.-%, noch bevorzugter zumindest 70 Gew.-%, sogar noch bevorzugter zumindest 75 Gew.-%, besonders bevorzugt zumindest 80 Gew.-%, insbesondere zumindest 85 Gew.-%, aufweist.

8. Kautschukzusammensetzung nach einem oder mehreren der vorhergehenden Ansprüche, **dadurch gekennzeichnet, dass** der organische Füllstoff F1 ein auf Lignin basierender Füllstoff ist, wobei vorzugsweise der organische Füllstoff F1 in einer Form vorliegt, die mittels hydrothermaler Behandlung der Lignin enthaltenden Biomasse erhalten werden kann, wobei die hydrothermale Behandlung vorzugsweise bei einer Temperatur in einem Bereich von > 100 °C bis < 300 °C, besonders bevorzugt von > 150 °C bis < 250 °C, durchgeführt worden ist.

9. Kautschukzusammensetzung nach einem oder mehreren der vorhergehenden Ansprüche, **dadurch gekennzeichnet, dass** der organische Füllstoff F1
einen STSA-Oberflächenbereich, bestimmt gemäß dem in der Beschreibung dargelegten Verfahren, in einem Bereich von > 20 oder > 22 oder > 23 oder 24 bis < 150 m²/g, vorzugsweise von 20 oder > 22 oder > 23 oder 24 bis 130 m²/g, besonders bevorzugt von 25 bis 120 m²/g, noch bevorzugter von 30 bis 110 m²/g, insbesondere von 40 bis 100 m²/g, am meisten bevorzugt von 40 bis < 100 m²/g aufweist, und/oder
einen BET-Oberflächenbereich in einem Bereich von 25 bis 120 m²/g, besonders bevorzugt in einem Bereich von 30 bis 110 m²/g, am meisten bevorzugt in einem Bereich von 40 bis 100 m²/g aufweist, und/oder
einen d99-Wert von < 25 µm, vorzugsweise < 20 µm, besonders bevorzugt < 18 µm, noch bevorzugter < 15 µm, sogar noch bevorzugter < 12 µm, ferner noch bevorzugter < 10 µm, sogar noch bevorzugter < 9 µm, sogar noch bevorzugter < 8 µm aufweist, wobei der d99-Wert jeweils mittels Laserdiffraktion gemäß ISO 13320:2009 bestimmt wird.

10. Kautschukzusammensetzung nach einem oder mehreren der vorhergehenden Ansprüche, **dadurch gekennzeichnet, dass** der organische Füllstoff F1
einen Sauerstoffgehalt in einem Bereich von > 8 Gew.-% bis < 30 Gew.-%, vorzugsweise von > 10 Gew.-% bis < 30 Gew.-%, besonders bevorzugt von > 15 Gew.-% bis < 30 Gew.-%, am meisten bevorzugt von > 20 Gew.-% bis < 30 Gew.-% aufweist, bezogen auf den aschefreien und wasserfreien Füllstoff, und/oder
einen Kohlenstoffgehalt in einem Bereich von > 60 Gew.-% bis < 90 Gew.-%, vorzugsweise von > 60 Gew.-% bis < 85 Gew.-%, besonders bevorzugt von > 60 Gew.-% bis < 82 Gew.-%, am meisten bevorzugt von > 60 Gew.-% bis < 80 Gew.-% aufweist, jeweils bezogen auf den aschefreien und wasserfreien Füllstoff.

11. Kautschukzusammensetzung nach einem oder mehreren der vorhergehenden Ansprüche, **dadurch gekennzeichnet, dass**
der zumindest eine Kautschuk, der mittels Schwefel vernetzbar ist, ein DienKautschuk ist, vorzugsweise ein Dienkautschuk ausgewählt aus der Gruppe bestehend aus Naturkautschuk (NR), synthetischem Naturkautschuk, insbesondere Isopren-Kautschuk (IR), Ethylen-Propylen-Dien-Monomer-Kautschuk (EPDM), Styrol-Butadien-Kautschuk (SBR), lösungspolymerisierter Styrol-Butadien-Kautschuk (SSBR), emulsionspolymerisiertem Styrol-Butadien-Kautschuk (ESBR), insbesondere funktionalisiertem SSBR, Butadien-Kautschuk (BR), Chloropren-Kautschuk (CR), Acrylnitril-Butadien-Kautschuk (NBR), Isobutylen-Isopren-Kautschuk (IIR), bromiertem Isobutylen-Isopren-Kautschuk (BIIR), chloriertem Isobutylen-Isopren-Kautschuk (CIIR), sowie Mischungen davon, und vorzugsweise ausgewählt ist aus Naturkautschuk, Styrol-Butadien-Kautschuk oder lösungspolymerisiertem Styrol-Butadien-Kautschuk sowie Mischungen davon,
und/oder dass Schwefel und/oder der zumindest eine Schwefel-Donor in der Kautschukzusammensetzung in einer Menge vorhanden ist, die in einem Bereich von 0,25 bis 10 phr, vorzugsweise 0,25 bis 7 phr, besonders bevorzugt 0,5 bis 5 phr, am meisten bevorzugt 1 bis 3 phr, liegt.

12. Kit-of-Parts, umfassend in räumlich getrennter Form,
als Teil (A) eine Kautschukzusammensetzung wie in einem oder mehreren der vorhergehenden Ansprüche definiert, wobei Teil (A) jedoch nicht Schwefel und/oder zumindest einen Schwefel-Donor des Vulkanisations-Systems VS wie in einem oder mehreren der vorhergehenden Ansprüche definiert umfasst, und
als Teil (B) ein Vulkanisations-System VS wie in Anspruch 1 oder 11 definiert, das zumindest Schwefel und/oder zumindest einen Schwefel-Donor umfasst.

13. Vulkanisierte Kautschukzusammensetzung, die durch Vulkanisation der vulkanisierbaren Kautschukzusammensetzung nach einem oder mehreren der Ansprüche 1 bis 11 erhalten werden kann, oder durch Vulkanisation einer vulkanisierbaren Kautschukzusammensetzung, die durch Kombinieren und Mischen der beiden Teile A) und B) des Kit-of-Parts nach Anspruch 12 erhalten werden kann.

14. Verwendung der vulkanisierbaren Kautschukzusammensetzung nach einem oder mehreren der Ansprüche 1 bis 11, des Kit-of-Parts nach Anspruch 12 oder der vulkanisierten Kautschukzusammensetzung nach Anspruch 13,
für den Einsatz bei der Herstellung von Reifen, vorzugsweise bei der Herstellung von Luftreifen und Vollgummireifen, von Reifenkomponenten, vorzugsweise ausgewählt aus Basis-Komponenten, d.h. Komponenten unterhalb der Lauffläche, Schulterstreifen (wings), Gürtelabdeckbändern (cap plies), Gürteln, Wulstkernen und/oder Wulstverstärkungen, und/oder für den Einsatz bei der Herstellung von vorzugsweise technischen Gummiartikeln, die vorzugsweise ausgewählt sind aus Antriebsriemen, Gurten/Bändern, Formteilen wie Puffern/Kissen, Lagern, insbesondere Hydrolagern, Transportbändern, Profilen, Dichtungen, Ringen und/oder Schläuchen.

15. Reifen, vorzugsweise Luftreifen oder Vollgummireifen, Reifenkomponente oder vorzugsweise technischer Gummiartikel, jeweils hergestellt unter Einsatz der vulkanisierbaren Kautschukzusammensetzung gemäß einem oder mehreren der Ansprüche 1 bis 11, des Kit-of-Parts gemäß Anspruch 12 oder der vulkanisierten Kautschukzusammensetzung gemäß Anspruch 13, wobei vorzugsweise im Fall von Reifenkomponenten diese ausgewählt sind aus Basis-Komponenten, d.h. Komponenten unterhalb der Lauffläche, Schulterstreifen (wings), Gürtelabdeckbändern (cap plies), Gürteln, Wulstkernen und/oder Wulstverstärkungen, und wobei vorzugsweise im Fall von Gummiartikeln wie vorzugsweise technischen Gummiartikeln diese ausgewählt sind aus Antriebsriemen, Gurten/Bändern, Formteilen wie Puffern/Kissen, Lagern, insbesondere Hydrolagern, Transportbändern, Profilen, Dichtungen, Ringen und/oder Schläuchen.

16. Verwendung des organischen Füllstoffs F1 wie in einem oder mehreren der vorhergehenden Ansprüche definiert, zur Erhöhung der dynamischen Steifigkeit, insbesondere des komplexen Moduls G*, zur Senkung des tan-delta-Werts, oder für beides, von vulkanisierten Kautschukzusammensetzungen, die aus vulkanisierbaren Kautschukzusammensetzungen erhalten werden können, die den organischen Füllstoff F1 enthalten, und vorzugsweise aus vulkanisierbaren Kautschukzusammensetzungen nach einem oder mehreren der Ansprüche 1 bis 11 erhalten werden können.

## Revendications

1. Composition de caoutchouc vulcanisable, comprenant
un système de vulcanisation VS, comprenant, à son tour, au moins du soufre et/ou au moins un donneur de soufre,
au moins un caoutchouc qui est réticulable au moyen de soufre et/ou un donneur de soufre, à condition que, si au moins un caoutchouc halobutyle est présent, il est présent dans la composition de caoutchouc en une quantité de < 70 phr, et
au moins une matière de charge organique en tant que première matière de charge F1, qui peut être obtenue à partir d'une biomasse contenant de la lignine, dont la teneur en lignine de Klason est d'au moins 60 % en poids, par rapport à sa teneur en matière sèche, dans laquelle la matière de charge organique F1
est différente du noir de carbone,
présente une teneur en ¹⁴C, déterminée selon la méthode décrite dans la spécification, dans une plage allant de 0,20 à 0,45 Bq/g de carbone, présente une surface BET, déterminée selon la méthode décrite dans la spécification, dans une plage allant de > 24,0 à 150 m²/g, et
est présente dans la composition de caoutchouc en une quantité dans une plage allant de 1 à < 140 phr,
dans laquelle la quantité de tout noir de carbone éventuellement présent dans la composition de caoutchouc en tant qu'au moins une deuxième matière de charge F2 est < 40 phr,
dans laquelle la quantité de tout organosilane éventuellement présent, qui présente au moins un groupe hydrolysable et au moins un atome de soufre, dans la composition de caoutchouc est < 7 phr,
à l'exception des compositions de caoutchouc vulcanisables VK1V2, VK1B1, VK2B1, VK2B2, VK2B3, VK2B4 et VK2B5 divulguées dans la partie expérimentale de PCT/EP2022/076858,
à l'exception de la composition de caoutchouc vulcanisable VKV3 divulguée dans la partie expérimentale de PCT/EP2022/073490 (publiée sous la référence WO 2023/025808 A1), et à l'exception des compositions de caoutchouc vulcanisables KV1VS, KI1VS, KI2VS et KI3VS divulguées dans la partie expérimentale de PCT/EP2022/073490 (publiée sous la référence WO 2022/243486 A1).

2. Composition de caoutchouc selon la revendication 1, **caractérisée en ce que** la matière de charge organique F1 présente une surface STSA, déterminée selon la méthode décrite dans la spécification, qui est différente de sa surface BET de 20 % au maximum, de préférence de 15 % au maximum, de manière plus préférée de 10 % au maximum, de manière encore plus préférée de 7,5 % au maximum, et de manière toujours plus préférée de 6,5 % ou 5,0 % au maximum.

3. Composition de caoutchouc selon la revendication 1 ou 2, **caractérisée en ce que** la quantité de tout noir de carbone éventuellement présent dans la composition de caoutchouc en tant qu'au moins une deuxième charge F2, est dans une plage allant de 0 à < 39 phr, de préférence de 0 à 35 phr, de manière plus préférée de 0 à 30 ou de 0 à < 30 phr, de manière encore plus préférée de 0 à < 29 phr, de manière en outre plus préférée de 0 à 25 phr, de manière toujours plus préférée de 0 à 20 ou à 15 phr, de manière encore plus préférée de 0 à 10 ou à 5 phr, et de manière toujours plus préférée **en ce que** la composition de caoutchouc ne contient pas ou ne contient substantiellement pas de noir de carbone en tant que deuxième matière de charge F2.

4. Composition de caoutchouc selon l'une quelconque des revendications précédentes, **caractérisée en ce que** le rapport de poids relatif entre la ou les charges organiques F1 et le ou les noirs de carbone utilisés comme matières de charge F2, le cas échéant, est compris dans une plage allant de 49 : 1 à 1 : 2, de préférence de 40 : 1 à 1 : 1,75, de manière plus préférée de 30 : 1 à 1 : 1,50, de manière encore plus préférée de 25 : 1 à 1 : 1,25, de manière toujours plus préférée de 20 : 1 à 1 : 1, et de manière encore plus préférée de 15 : 1 à > 1 : 1, ou **en ce que** la composition de caoutchouc ne contient pas ou ne contient substantiellement pas de noir de carbone en tant que matière(s) de charge F2.

5. Composition de caoutchouc selon l'une quelconque ou plusieurs des revendications précédentes, **caractérisée en ce que** la quantité de tout organosilane éventuellement présent qui présente au moins un groupe hydrolysable et au moins un atome de soufre, présent dans la composition de caoutchouc est < 5 phr, de préférence **en ce que** la composition de caoutchouc ne contient pas ou ne contient substantiellement pas d'organosilane qui présente au moins un groupe hydrolysable et au moins un atome de soufre, et de manière encore plus préférée **en ce que** la composition de caoutchouc ne contient pas ou ne contient substantiellement pas d'organosilane, quel qu'il soit.

6. Composition de caoutchouc selon l'une quelconque ou plusieurs des revendications précédentes, **caractérisée en ce qu'**elle contient l'au moins une matière de charge organique F1 en une quantité dans une plage allant de 1 à 139 ou à 138 phr, de préférence de 5 á 130 ou à 115 phr, de manière particulièrement préférée de 10 à 100 ou à 80 phr, de manière plus particulièrement préférée de 15 à 70 phr, de manière la plus préférée de 15 à 60 phr ou de 20 à 55 phr.

7. Composition de caoutchouc selon l'une quelconque ou plusieurs des revendications précédentes, **caractérisée en ce que** la matière de charge organique F1 est une matière de carbone sous forme de particules qui peut être obtenue à partir d'une biomasse contenant de la lignine, de préférence à partir de phytomasse contenant de la lignine, dans laquelle la biomasse contenant de la lignine de préférence présente une teneur de lignine de Klason, par rapport à sa teneur de matière sèche, d'au moins 65 % en poids, de manière plus préférée d'au moins 70 % en poids, de manière encore plus préférée d'au moins 75 % en poids, de manière particulièrement préférée d'au moins 80 % en poids, notamment d'au moins 85 % en poids.

8. Composition de caoutchouc selon l'une quelconque ou plusieurs des revendications précédentes, **caractérisée en ce que** la matière de charge organique F1 est une matière de charge à base de lignine, la matière de charge organique F1 de préférence étant présente sous une forme pouvant être obtenue par traitement hydrothermique d'une biomasse contenant de la lignine, le traitement hydrothermique ayant de préférence été réalisé à une température dans une plage allant de > 100 °C à < 300 °C, et de manière particulièrement préférée de > 150 °C à < 250 °C.

9. Composition de caoutchouc selon l'une quelconque ou plusieurs des revendications précédentes, **caractérisée en ce que** la matière de charge organique F1 présente
une surface STSA, déterminée selon la méthode décrite dans la spécification, dans une plage allant de > 20 ou > 22 ou > 23 ou 24 à < 150 m²/g, de préférence de 20 ou > 22 ou > 23 ou 24 à 130 m²/g, de manière particulièrement préférée de 25 à 120 m²/g, de manière plus particulièrement préférée de 30 à 110 m²/g, en particulier de 40 à 100 m²/g, de manière la plus préférée de 40 à < 100 m²/g, et/ou
une surface BET dans une plage allant de 25 à 120 m²/g, de manière particulièrement préférée dans une plage allant de 30 à 110 m²/g, de manière la plus préférée dans une plage allant de 40 à 100 m²/g, et/ou
une valeur d99 de < 25 µm, de préférence < 20 µm, de manière particulièrement préférée < 18 µm, de manière plus particulièrement préférée < 15 µm, de manière encore plus préférée < 12 µm, de manière toujours plus préférée < 10 µm, de manière encore plus préférée < 9 µm, de manière en outre plus préférée < 8 µm, la valeur d99 étant respectivement déterminée au moyens de diffraction par laser conformément à la norme ISO 13320:2009.

10. Composition de caoutchouc selon l'une quelconque ou plusieurs des revendications précédentes, **caractérisée en ce que** la matière de charge organique F1 présente
une teneur en oxygène comprise dans une plage allant de > 8 % en poids à < 30 % en poids, de préférence de > 10 % en poids et < 30 % en poids, de manière particulièrement préférée de > 15 % en poids à < 30 % en poids, et de manière encore plus préférée de > 20 % en poids à < 30 % en poids, par rapport à la charge exempte de cendres et exempte d'eau, et/ou
une teneur en carbone comprise dans une plage allant de > 60 % en poids à < 90 % en poids, de préférence de > 60 % en poids et < 85 % en poids, de manière particulièrement préférée de > 60 % en poids à < 82 % en poids, et de manière encore plus préférée de > 60 % en poids à < 80 % en poids, respectivement par rapport à la charge exempte de cendres et exempte d'eau.

11. Composition de caoutchouc selon l'une quelconque ou plusieurs des revendications précédentes, **caractérisée en ce que**
l'au moins un caoutchouc réticulable au moyen de soufre est un caoutchouc diénique, de préférence un caoutchouc diénique choisi dans le groupe constitué par le caoutchouc naturel (NR), le caoutchouc naturel synthétique, en particulier le caoutchouc isoprène (lR), le caoutchouc à base de monomère d'éthylène-propylène-diène (EPDM), le caoutchouc styrène-butadiène (SBR), le caoutchouc styrène-butadiène polymérisé en solution (SSBR), le caoutchouc styrène-butadiène polymérisé en émulsion (ESBR), en particulier le SSBR fonctionnalisé, le caoutchouc butadiène (BR), le caoutchouc chloroprène (CR), le caoutchouc acrylonitrile-butadiène (NBR), le caoutchouc isobutylène-isoprène (llR), le caoutchouc isobutylène-isoprène bromé (BIIR), le caoutchouc isobutylène-isoprène chloré (CIIR), ainsi que leurs mélanges, et de préférence est choisi parmi le caoutchouc naturel, le caoutchouc styrène-butadiène ou le caoutchouc styrène-butadiène polymérisé en solution, ainsi que leurs mélanges, et/ou **en ce que**
le soufre et/ou l'au moins un donneur de soufre est contenu dans la composition de caoutchouc en une quantité dans une plage allant de 0,25 à 10 phr, de préférence de 0,25 à 7 phr, de manière particulièrement préférée de 0,5 à 5 phr, de manière plus préférée de 1 à 3 phr.

12. Kit de pièces, comprenant, sous forme spatialement séparée,
en tant que partie (A), une composition de caoutchouc tel que définie dans l'une quelconque ou plusieurs des revendications précédentes, mais où la partie (A) ne comprend pas du soufre et/ou de l'au moins un donneur de soufre du système de vulcanisation VS tel que défini dans l'une quelconque ou plusieurs des revendications précédentes, et
en tant que partie (B) un système de vulcanisation VS tel que défini dans la revendication 1 ou 11, et comprenant au moins du soufre et/ou au moins un donneur de soufre.

13. Composition de caoutchouc vulcanisée qui peut être obtenue par vulcanisation de la composition de caoutchouc vulcanisable selon l'une quelconque ou plusieurs des revendications 1 à 11, ou par vulcanisation d'une composition de caoutchouc vulcanisable qui peut être obtenue en combinant et en mélangeant les deux parties A) et B) du kit de pièces selon la revendication 12.

14. Utilisation de la composition de caoutchouc vulcanisable selon l'une quelconque ou plusieurs des revendications 1 à 11, du kit de pièces selon la revendication 12, ou de la composition de caoutchouc vulcanisée selon la revendication 13,
pour l'utilisation dans la fabrication de pneus, de préférence dans la fabrication de pneus pneumatiques et de bandages en caoutchouc pleins, de composants de pneus, de préférence choisis parmi des composants de base, c'est-à-dire composants en dessous de la surface de roulement, des bandes d'épaulement (wings), des bandes de recouvrement de ceinture (cap-plies), des ceintures, des noyaux de talon et/ou des renforts de talon, et/ou pour l'utilisation dans la fabrication d'articles en caoutchouc de préférence techniques, qui sont de préférence choisis parmi les courroies de transmission, les sangles, les pièces moulées telles que les tampons, les paliers, en particulier les paliers hydrauliques, les bandes de transport, les profilés, les joints, les anneaux et/ou les tuyaux.

15. Pneu, de préférence pneu pneumatique ou bandage en caoutchouc plein, composant de pneus ou article en caoutchouc de préférence technique, à chaque fois fabriqué en utilisant la composition de caoutchouc vulcanisable selon l'une quelconque ou plusieurs des revendications 1 à 11, le kit de pièces selon la revendication 12 ou la composition de caoutchouc vulcanisée selon la revendication 13, dans lequel, de préférence dans le cas des composants de pneus, ils sont choisis parmi les composants de base, c'est-à-dire composants en dessous de la surface de roulement, des bandes d'épaulement (wings), des bandes de recouvrement de ceinture (cap-plies), des ceintures, des noyaux de talon et/ou des renforts de talon, et/ou dans lequel, de préférence dans le cas des articles en caoutchouc, comme de préférence des articles techniques en caoutchouc, ils sont de préférence choisis parmi les courroies de transmission, les sangles, les pièces moulées telles que les tampons, les paliers, en particulier les paliers hydrauliques, les bandes de transport, les profilés, les joints, les anneaux et/ou les tuyaux.

16. Utilisation de la matière de charge organique F1, telle que définie dans l'une quelconque ou plusieurs des revendications précédentes, pour augmenter la rigidité dynamique, en particulier le module complexe G*, pour réduire la valeur de tan delta, ou les deux, de compositions de caoutchouc vulcanisées pouvant être obtenues à partir de compositions de caoutchouc vulcanisables contenant la matière charge organique F1, de préférence à partir de compositions de caoutchouc vulcanisables selon l'une quelconque ou plusieurs des revendications 1 à 11.
